# FASCICULE DE BREVET EUROPEEN

(11) **EP 3 752 572 B1**
(45) Date de publication et mention de la délivrance du brevet: **22.05.2024**
(21) Numéro de dépôt: 19711151.1
(22) Date de dépôt: 13.02.2019
(51) Int. Cl.: C09K 5/04, C10M 171/00, C10M 105/38

(54) **PROCÉDÉ DE CHAUFFAGE ET / OU DE CLIMATISATION D'UN VÉHICULE**
VERFAHREN ZUM HEIZEN UND/ODER KLIMATISIEREN EINES FAHRZEUGS
METHOD FOR HEATING AND/OR COOLING A VEHICLE

(30) Priorité: 15.02.2018 FR 1851281
(43) Date de publication de la demande: 23.12.2020
(73) Titulaire: ARKEMA FRANCE, 92700 Colombes (FR)
(72) Inventeur: RACHED, Wissam, 92705 COLOMBES CEDEX (FR)
(74) Mandataire: Arkema Patent
(86) Numéro de dépôt international: PCT/FR2019/050317
(87) Numéro de publication internationale: WO 2019/158857

(56) Documents cités:
- FR-A1- 2 964 975
- US-A1- 2012 024 007
- US-A1- 2018 030 325
- Bitzer: "Technical information. KT-510-6", Bitzer, 8 décembre 2016 (2016-12-08), pages 1-24, XP055511192, Extrait de l'Internet: URL:https://www.gtex.nl/downloadfile.aspx? file=kt-510-6.pdf [extrait le 2018-10-01]

## Description

### DOMAINE DE L'INVENTION

La présente invention concerne un procédé de chauffage et/ou de climatisation d'un habitacle de véhicule automobile, au moyen d'une composition de transfert de chaleur comprenant du 2,3,3,3-tétrafluoropropène ainsi qu'un lubrifiant ester de polyol, notamment dans le contexte du remplacement des compositions de transfert de chaleur à base de 1,1,1,2-tétrafluoroéthane.

### ARRIERE-PLAN TECHNIQUE

Dans les véhicules automobiles, le moteur thermique comporte un circuit de circulation d'un fluide caloporteur qui est utilisé pour le refroidissement du moteur et également pour le chauffage de l'habitacle. A cet effet, le circuit comprend notamment une pompe et un aérotherme dans lequel circule un flux d'air qui récupère la chaleur emmagasinée par le fluide caloporteur afin de chauffer l'habitacle.

Par ailleurs, un système de climatisation destiné à refroidir l'habitacle d'un véhicule automobile comprend un évaporateur, un compresseur, un condenseur, un détendeur et un fluide susceptible de changer d'états (liquide/gaz) communément désigné fluide frigorigène. Le compresseur, directement entraîné par le moteur du véhicule à l'aide d'une courroie et d'une poulie, comprime le fluide frigorigène, le refoulant sous haute pression et à haute température vers le condenseur. Le condenseur, grâce à une ventilation forcée, provoque la condensation du gaz qui arrive à l'état gazeux à haute pression et haute température. Le condenseur liquéfie le gaz grâce à l'abaissement de température de l'air qui le traverse. L'évaporateur est un échangeur thermique qui prélève des calories à l'air qui sera soufflé dans l'habitacle. Le détendeur permet de réguler le débit d'entrée du gaz dans la boucle via une modification de section de passage dépendant de la température et de la pression au niveau de l'évaporateur. Ainsi, l'air chaud venant de l'extérieur se refroidit en traversant l'évaporateur.

Le fluide frigorigène largement utilisé dans la climatisation automobile est le 1,1,1,2-tétrafluoroéthane (HFC-134a).

Cependant, un grand nombre de fluides HFC, dont le HFC-134a, peuvent contribuer de manière néfaste à l'effet de serre. Cette contribution est quantifiée par un paramètre numérique, le GWP (Global Warming Potential ou potentiel de réchauffement climatique).

Les hydrofluorooléfines (HFO) telles que le 2,3,3,3-tétrafluoropropène (HFO-1234yf) ou le 1,3,3,3-tétrafluoropropène (HFO-1234ze) constituent des fluides à bas GWP qui sont susceptibles d'être utilisés dans les applications de transfert de chaleur.

L'utilisation d'un lubrifiant (ou huile de lubrification) est généralement nécessaire pour assurer le bon fonctionnement des pièces mécaniques mobiles dans le circuit, et notamment pour assurer la lubrification des paliers du compresseur.

Les esters de polyol (POE) ont en particulier été proposés comme lubrifiants possibles pour les HFO.

Le document WO 2008/107623 décrit un système de gestion d'énergie d'un véhicule automobile comprenant une boucle frigorifique réversible avec circulation d'un fluide frigorigène, des moyens d'inversion du cycle de fonctionnement de la boucle frigorifique mobiles entre une position en mode frigorifique et une position en mode pompe à chaleur, au moins une première source apte à récupérer l'énergie du fluide frigorigène, et au moins une seconde source apte à évaporer le fluide frigorigène suite à la détente dudit fluide de l'état liquide à l'état diphasique, les moyens d'inversion étant aptes à permettre un écoulement du fluide frigorigène de la première source de récupération en direction d'au moins une source d'évaporation, lorsqu'ils sont dans une position identique à celle correspondant au mode pompe à chaleur.

Le document WO 2009/124128 décrit un procédé de sélection d'un fluide de transfert de chaleur et d'un lubrifiant pour un système de compression de vapeur.

Le document WO 2010/083100 décrit des compositions de transfert de chaleur comprenant du dioxyde de carbone et un lubrifiant à base de POE.

L'article Analysis of LGWP Alternatives for Small Réfrigération (Plugin) Applications, de Yana Motta et al., dans International Réfrigération and Air Conditioning Conférence at Purdue (2010) compare l'efficacité du HFO 1234yf et du HFO-1234ze dans des systèmes de réfrigération de petite taille.

Le document US 2012/024007 décrit un compresseur pour la réfrigération ou la climatisation chargé avec un fluide de transfert de chaleur qui peut être, entre autres, du HFO-1234yf, et un lubrifiant comprenant du POE.

Le document WO 2012/001255 décrit des compositions comprenant un lubrifiant à base de POE et un fluide de transfert de chaleur contenant au moins 99,8 % en poids de HFO-1234yf.

Le document US 8,685,271 décrit un groupe de POE et leur utilisation avec divers fluides de transfert de chaleur possibles.

L'article Lubricant Development To Meet Lower GWP Réfrigérant Challenges, de J.A. Karnaz, dans 15th International Réfrigération and Air Conditioning Conférence at Purdue (2014) s'intéresse à l'évaluation des lubrifiants pour les fluides de transfert de chaleur dits de prochaine génération, dont le HFO 1234ze.

L'article Convection-driven Absorption of R-1234yf in Lubricating Oil, de Neto et al. dans International Journal of Réfrigération 44:151-160 (2014) décrit la détermination du taux d'absorption du HFO-1234yf à travers la surface d'une couche de lubrifiant POE ISO VG 10 dans un système fermé.

Le document EP 2947136 décrit une huile de lubrification comportant une huile de base, un composé sulfure et un gallate. L'huile de base peut notamment être du POE. Cette huile de lubrification peut être utilisée, entre autres, avec du HFO-1234yf.

L'article Evaluating Lubricants for Lower GWP Réfrigérant Compressor Operation, de J.A. Karnaz, dans 16th International Réfrigération and Air Conditioning Conférence at Purdue (2015) s'intéresse à l'évaluation des lubrifiants pour un ensemble de fluides de transfert de chaleur, dont en particulier des mélanges contenant des HFO.

Le document US 2016/053153 décrit des compositions de transfert de chaleur comprenant un tétrafluoropropène et un lubrifiant à base de POE.

Le document WO 2016/209560 décrit des compositions de transfert de chaleur comprenant une oléfine fluorée et un lubrifiant à base de POE ayant une viscosité cinématique à 40°C de 150 à 360 mm2/s (150 à 360 cSt).

US 2012/024007 décrit le transfert de chaleur dans un système résidentiel à compression de vapeur réversible ayant des échangeurs du type air/fluide et comprenant HFO1234yf et un lubrifiant, de préférence un POE à base d'ester de dipentaérythritol et ayant un viscosité à 40°C de 25-70cSt. US 2018/030325 décrit le transfert de chaleur dans un système résidentiel à compression de vapeur réversible ayant une surchauffe de 5.5°C et comprenant HFO1234yf et un POE comme lubrifiant, de préférence ISO 68 POE.

Il existe donc un réel besoin de fournir des procédés de chauffage et/ou de climatisation d'un habitacle de véhicule automobile efficaces, capables d'améliorer le rendement de la boucle frigorifique, notamment dans le contexte d'une substitution performante des compositions de transfert de chaleur à base de HFC-134a par des compositions de transfert de chaleur à bas GWP.

### RESUME DE L'INVENTION

L'invention concerne en premier lieu un procédé de chauffage et/ou de climatisation d'un habitacle de véhicule automobile à l'aide d'une boucle frigorifique réversible, dans laquelle circule une composition de transfert de chaleur, comprenant un premier échangeur de chaleur, un détendeur, un second échangeur de chaleur, un compresseur et des moyens d'inversion du fonctionnement de la boucle frigorifique réversible, dans lequel la composition de transfert de chaleur comprend :
- un fluide frigorigène, qui comprend du 2,3,3,3-tétrafluoropropène, et
- un lubrifiant ;
dans lequel le lubrifiant comprend un ester de polyol, la solubilité du 2,3,3,3-tétrafluoropropène dans le lubrifiant à 0°C et à une pression absolue de 2,2 bar étant inférieure à la solubilité du 1,1,1,2-tétrafluoroéthane dans le lubrifiant à 0°C et à une pression absolue de 2,0 bar.

Dans certains modes de réalisation, le procédé comprend les étapes :
- d'évaporation du fluide frigorigène ;
- de surchauffe du fluide frigorigène ;
- de compression du fluide frigorigène

Dans certains modes de réalisation, la surchauffe du fluide frigorigène est de 1 à 20°C, de préférence de 2 à 10°C, de préférence encore de 3 à 5°C.

Dans certains modes de réalisation, le lubrifiant comprend un ester de dipentaérythritol.

Dans certains modes de réalisation, le lubrifiant présente une viscosité cinématique à 40°C de 10 à 200 mm2/s (10 à 200 cSt), de préférence de 20 à 100 mm2/s (20 à 100 cSt), et de préférence encore de 30 à 80 mm2/s (30 à 80 cSt).

Dans certains modes de réalisation, ladite composition de transfert de chaleur est une composition de transfert de chaleur de remplacement, qui est utilisée en remplacement d'une composition de transfert de chaleur initiale comprenant :
- un fluide frigorigène initial, et
- un lubrifiant initial.

Dans certains modes de réalisation, la surchauffe avec la composition de transfert de chaleur de remplacement est inférieure ou égale à la surchauffe lorsque le même procédé est mis en oeuvre avec la composition de transfert de chaleur initiale ; et de préférence la surchauffe avec la composition de transfert de chaleur de remplacement est inférieure d'au moins 2°C, de préférence d'au moins 5°C, de préférence encore d'au moins 10°C, par rapport à la surchauffe lorsque le même procédé est mis en oeuvre avec la composition de transfert de chaleur initiale.

Dans certains modes de réalisation, le lubrifiant de la composition de transfert de chaleur de remplacement est identique au lubrifiant initial.

Dans certains modes de réalisation, le lubrifiant de la composition de transfert de chaleur de remplacement est différent du lubrifiant initial.

Dans certains modes de réalisation, le lubrifiant de la composition de transfert de chaleur de remplacement a une viscosité cinématique à 40°C inférieure ou égale à la viscosité cinématique à 40°C du lubrifiant initial, la différence entre la viscosité cinématique à 40°C du lubrifiant initial et la viscosité cinématique à 40°C du lubrifiant de la composition de transfert de chaleur de remplacement étant de préférence supérieure ou égale à 5 mm2/s (5 cSt), de préférence encore supérieure ou égale à 10 mm2/s (10 cSt).

Dans certains modes de réalisation, le lubrifiant initial comprend un ester de polyol, et de préférence comprend un ester de dipentaérythritol.

Dans certains modes de réalisation, le fluide frigorigène initial comprend du 1,1,1,2-tétrafluoroéthane ou consiste essentiellement en du 1,1,1,2-tétrafluoroéthane.

Dans certains modes de réalisation, le premier et le second échangeurs sont du type air/fluide frigorigène.

Dans certains modes de réalisation, la boucle frigorifique est couplée thermiquement avec un circuit de refroidissement de moteur et/ou de circuit électronique.

Dans certains modes de réalisation, le premier échangeur de chaleur est traversé à la fois par le fluide frigorigène, et par des gaz d'échappement issus d'un moteur thermique du véhicule automobile ou par la chaleur issue d'une batterie ou d'un circuit électronique du véhicule automobile.

Dans certains modes de réalisation, la boucle frigorifique comprend en dérivation au moins un échangeur de chaleur communiquant thermiquement avec un flux d'air, destiné à être admis à l'intérieur d'un moteur thermique du véhicule automobile, ou avec des gaz d'échappement issus du moteur thermique, et/ou avec de la chaleur issue d'un moteur électrique et/ou d'un circuit électronique et d'une batterie du véhicule automobile.

Dans certains modes de réalisation, la boucle frigorifique est installée dans le véhicule automobile pour la récupération d'énergie issue d'un moteur thermique et/ou d'une batterie électrique.

Dans certains modes de réalisation, le véhicule automobile est un véhicule électrique ou hybride.

La présente invention permet de répondre au besoin exprimé ci-dessus. Elle fournit plus particulièrement un procédé de chauffage et/ou de climatisation d'un habitacle de véhicule automobile efficace, capable d'améliorer le rendement de la boucle frigorifique, notamment dans le contexte d'une substitution performante des compositions de transfert de chaleur à base de HFC-134a par des compositions de transfert de chaleur à bas GWP.

L'invention repose sur la constatation que le HFO-1234yf est relativement peu soluble dans certaines huiles POE (et notamment dans les huiles POE du même type que l'huile POE ISO 55), c'est-à-dire moins soluble que le HFO-1234ze et que le fluide de référence HFC-134a.

L'utilisation de telles huiles en combinaison avec le HFO-1234yf permet de remplacer des compositions de transfert de chaleur comprenant du HFC-134a de manière particulièrement efficace, dans les procédés de chauffage et/ou de climatisation d'un habitacle de véhicule automobile comportant une boucle frigorigène réversible.

Dans certains modes de réalisation, l'utilisation de telles huiles permet de remplacer des compositions de transfert de chaleur comprenant du HFC-134a de manière particulièrement efficace, également dans les procédés de chauffage et/ou de climatisation d'un habitacle de véhicule automobile comportant une boucle frigorigène réversible, faisant intervenir une surchauffe après l'évaporation.

Par exemple, dans le contexte du remplacement d'une composition contenant du HFC-134a par une composition contenant du HFO-1234yf, il est possible, d'obtenir les bénéfices suivants :
- une réduction de la surchauffe à l'évaporation lors du remplacement ; ou
- une réduction de la viscosité du lubrifiant lors du remplacement ;
Il est bien entendu possible de combiner ces deux aspects.

Dans une installation de transfert de chaleur, le lubrifiant est principalement présent dans le compresseur, pour la lubrification des parties mobiles. Une fraction du lubrifiant peut toutefois être entraînée hors du compresseur et ainsi circuler dans l'ensemble du circuit contenant le fluide frigorigène.

Un premier bénéfice de l'invention concerne la réduction de la surchauffe lors du changement de composition de transfert de chaleur.

La surchauffe du fluide frigorigène après l'évaporation permet :
- de limiter la présence de fluide frigorigène sous forme liquide dans le compresseur (la compression de liquide étant une cause majeure de panne des compresseurs) ;
- de diminuer la solubilité du fluide frigorigène dans l'huile dans le compresseur et ainsi d'éviter le moussage et donc à nouveau la compression de liquide surtout au démarrage ;
- de limiter la perte de viscosité de l'huile quand elle est en contact avec le fluide frigorigène, cette perte de viscosité étant néfaste pour la lubrification des paliers et des pièces en mouvement dans le compresseur ; et
- de faciliter la séparation du fluide frigorigène et du lubrifiant à la sortie du compresseur.

D'un autre côté, la présence de la surchauffe a pour conséquence de réduire les performances du système.

De par le choix d'un lubrifiant de type POE dans lequel le HFO-1234yf est peu soluble (en comparaison du fluide de référence HFC-134a), la viscosité du lubrifiant est relativement peu affectée en présence du HFO-1234yf dans le compresseur. Cela permet de réduire la surchauffe, et ainsi d'augmenter les performances, sans entraîner de conséquences négatives sur la prévention du moussage, sur la lubrification ou sur la séparation du lubrifiant et du fluide frigorigène.

La réduction de la surchauffe est particulièrement bénéfique lorsque le procédé est mis en oeuvre pour la climatisation.

Un deuxième bénéfice de l'invention concerne l'utilisation d'une huile de viscosité inférieure, afin de diminuer les forces de frottement sur les paliers du compresseur par rapport à une huile de référence, surtout dans les zones ou l'huile n'est pas en mélange avec les réfrigérants. Or la puissance consommée par palier de lubrification est proportionnelle à la viscosité du lubrifiant.

La réduction de la viscosité de l'huile permet également d'améliorer la lubrification au démarrage de l'installation (ce qui peut permettre de limiter la consommation énergétique liée au chauffage du compresseur lors de ce démarrage) ; et de limiter les pertes de charge dans le circuit et donc de réduire la consommation énergétique liée au pompage.

Cette réduction de la viscosité est également particulièrement bénéfique lorsque la température extérieure est faible. En effet, une huile visqueuse à faible température extérieure nécessite un préchauffage, qui consomme de l'énergie électrique. Dans le contexte des véhicules électriques, en particulier, la batterie elle-même doit être préchauffée, ce qui ajoute à la consommation d'énergie électrique. L'utilisation d'une huile peu visqueuse permet donc de limiter la consommation d'énergie électrique requise au démarrage, lorsque la température extérieure est faible.

### BREVE DESCRIPTION DES FIGURES

Les **figures 1 à 4** illustrent des modes de réalisation d'une boucle frigorifique réversible, dans laquelle les moyens d'inversion du fonctionnement sont un moyen d'inversion du sens de circulation du fluide frigorigène.
Les **figures 5****,** **6** **et** **7** illustrent des modes de réalisation d'une boucle frigorifique réversible, dans laquelle les moyens d'inversion du fonctionnement sont des vannes d'arrêts (de fermeture), permettant notamment de modifier le parcours du fluide frigorigène et l'inversion de la fonction de certains échangeurs de chaleur.
La **figure 8** représente la pression à l'entrée du compresseur (en bar, en ordonnées) en fonction de la température à l'entrée du compresseur (en °C, en abscisse), pour trois mélanges fluide frigorigène / lubrifiant A, B et C comme décrit plus en détail dans la partie exemples.
La **figure 9** représente la pression à l'entrée du compresseur (en bar, en ordonnées) en fonction de la température à l'entrée du compresseur (en °C, en abscisse), pour trois mélanges fluide frigorigène / lubrifiant D, E et F comme décrit plus en détail dans la partie exemples.
La **figure 10** représente la viscosité cinématique (en cSt, en ordonnées) en fonction de la température à l'entrée du compresseur (en °C, en abscisse), pour trois mélanges fluide frigorigène / lubrifiant A, B et C comme décrit plus en détail dans la partie exemples.

### DESCRIPTION DE MODES DE REALISATION DE L'INVENTION

L'invention est maintenant décrite plus en détail et de façon non limitative dans la description qui suit.

L'invention concerne un procédé de transfert de chaleur pour le chauffage et/ou la climatisation d'un habitacle de véhicule automobile, mis en oeuvre au moyen d'une installation de transfert de chaleur. L'installation contient une composition de transfert de chaleur, qui comprend un fluide frigorigène.

Dans certains modes de réalisation, l'installation de transfert de chaleur était à l'origine conçue pour fonctionner avec une autre composition de transfert de chaleur, dite composition de transfert de chaleur dite initiale (et notamment avec un autre fluide frigorigène, dit fluide frigorigène initial).

Dans certains modes de réalisation, la composition de transfert de chaleur utilisée dans le procédé de l'invention est une composition de transfert de chaleur dite de remplacement, c'est-à-dire que la même installation de transfert de chaleur était préalablement utilisée pour mettre en oeuvre un procédé de transfert de chaleur avec une autre composition de transfert de chaleur, dite composition de transfert de chaleur dite initiale.

Les deux paragraphes précédents correspondent à l'hypothèse d'un remplacement.

Dans ce cas, la composition de transfert de chaleur initiale consiste en un fluide frigorigène dit initial, un lubrifiant dit initial, et des additifs éventuels.

La composition de transfert de chaleur de remplacement consiste en un fluide frigorigène dit de remplacement, un lubrifiant dit de remplacement, et des additifs éventuels.

Par « *fluide frigorigène* » ou « *fluide de transfert de chaleur* »*,* on entend un fluide susceptible d'absorber de la chaleur en s'évaporant à basse température et basse pression et de rejeter de la chaleur en se condensant à haute température et haute pression, dans un circuit de compression de vapeur, selon l'application considérée. De manière générale, un fluide frigorigène peut consister essentiellement en un seul composé ou être un mélange de plusieurs composés.

Le fluide frigorigène de remplacement est différent du fluide frigorigène initial.

Dans certains modes de réalisation, le lubrifiant de remplacement est identique au lubrifiant initial.

Dans d'autres modes de réalisation, le lubrifiant de remplacement est différent du lubrifiant initial.

Le terme « *lubrifiant* » est utilisé de manière synonyme à *« huile de lubrification* » ou « *huile ».*

Dans certains modes de réalisation, le procédé de l'invention comprend successivement :
- une mise en oeuvre avec la composition de transfert de chaleur initiale ;
- le remplacement de la composition de transfert de chaleur initiale par la composition de transfert de chaleur de remplacement ; et
- une mise en oeuvre avec la composition de transfert de chaleur de remplacement.

Dans d'autres modes de réalisation, l'installation est directement mise en oeuvre avec la composition de transfert de chaleur de remplacement, sans être mise en oeuvre avec la composition de transfert de chaleur initiale - et ce, bien qu'elle soit, de par sa conception originelle, adaptée pour fonctionner avec la composition de transfert de chaleur initiale.

Cette hypothèse est, par extension, aussi considérée comme un cas de « *remplacement* » au sens de l'invention.

### Procédé de transfert de chaleur

Le procédé de transfert de chaleur de l'invention est un procédé de chauffage et/ou de climatisation d'un habitacle de véhicule automobile.

Le procédé selon l'invention peut ainsi être un procédé de climatisation de l'habitacle.

Alternativement, le procédé selon l'invention peut être un procédé de chauffage de l'habitacle.

Alternativement, le procédé selon l'invention peut être un procédé dans lequel une ou plusieurs phases de climatisation de l'habitacle alternent avec une ou plusieurs phases de chauffage de l'habitacle.

Le véhicule automobile peut être un véhicule thermique, électrique, ou hybride. Il comporte au moins un moteur, qui peut être un moteur électrique ou thermique. Lorsque le véhicule est électrique ou hybride, il comporte un circuit électronique et une batterie de traction, désignée plus simplement batterie dans la suite.

Le procédé de transfert de chaleur de l'invention est mis en oeuvre dans une installation de transfert de chaleur, intégrée au véhicule. L'installation de transfert de chaleur comporte une boucle frigorifique réversible, dans laquelle circule la composition de transfert de chaleur, comprenant un premier échangeur de chaleur, un détendeur, un second échangeur de chaleur, un compresseur et des moyens d'inversion du fonctionnement de la boucle frigorifique réversible.

Selon l'invention, les moyens d'inversion du fonctionnement de la boucle frigorifique réversible sont des moyens d'inversion du fonctionnement de la boucle frigorifique entre une position en mode frigorifique et une position en mode pompe à chaleur.

Les moyens d'inversion susmentionnés peuvent être des moyens de modification du parcours du fluide frigorigène dans la boucle frigorifique réversible, ou des moyens d'inversion du sens de circulation du fluide frigorigène dans ladite boucle.

Les moyens d'inversion susmentionnés peuvent être une vanne à quatre voies, une vanne d'inversion, une vanne d'arrêt (de fermeture), un détendeur, ou leurs combinaisons.

Par exemple, lors de l'inversion du mode de fonctionnement de la boucle frigorifique, le rôle d'un échangeur de chaleur peut être changé : par exemple, un échangeur de chaleur peut jouer le rôle d'un condenseur dans un mode frigorifique ou le rôle d'un évaporateur dans un mode de pompe à chaleur.

La boucle frigorifique réversible peut typiquement contenir des canalisations, tuyaux, flexibles, réservoir ou autres, dans lesquels circule le fluide frigorigène, entre les différents échangeurs, détendeurs, vannes...

Suivant le mode de fonctionnement de la boucle, frigorifique ou pompe à chaleur, le premier échangeur de chaleur peut jouer le rôle d'évaporateur ou de récupérateur d'énergie. Il en est de même pour le second échangeur de chaleur. En mode frigorifique, le second échangeur permet le refroidissement du flux d'air destiné à être pulsé à l'intérieur de l'habitacle du véhicule automobile. En mode pompe à chaleur, le second échangeur permet de réchauffer le flux d'air destiné à l'habitacle du véhicule automobile.

Le premier et second échangeurs de chaleur sont du type air/fluide frigorigène.

Dans le procédé selon la présente invention la boucle frigorifique peut être couplée thermiquement, à travers les échangeurs de chaleur, avec le circuit de refroidissement du moteur et/ou du circuit électronique du véhicule. Ainsi, la boucle peut comprendre au moins un échangeur de chaleur traversé à la fois par le fluide frigorigène et par un fluide caloporteur, notamment l'air ou l'eau du circuit de refroidissement du moteur thermique ou électrique, et/ou du circuit électronique.

Selon une variante du procédé, le premier échangeur de chaleur est traversé à la fois par le fluide frigorigène et par des gaz d'échappement issus du moteur thermique du véhicule automobile ; ces derniers peuvent communiquer thermiquement avec un circuit de fluide caloporteur.

Selon une variante du procédé, le premier échangeur de chaleur est traversé à la fois par le fluide frigorigène et par la chaleur issue de la batterie ou du circuit électronique du véhicule automobile, en particulier du véhicule automobile électrique.

La boucle frigorifique dans le procédé, selon la présente invention, peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile, et/ou avec la chaleur issue du moteur électrique et/ou du circuit électronique du véhicule automobile électrique.

Le procédé selon la présente invention convient tout particulièrement lorsque la température extérieure est inférieure à 3°C, de préférence inférieure ou égale à -2°C, préférentiellement inférieure ou égale à -7°C, en particulier inférieure ou égale à -12°C, encore plus préférentiellement inférieure ou égale à -17°C, par exemple inférieure ou égale à -22°C, et avantageusement inférieure à -27°C, et de préférence supérieur ou égale à -29°C.

Le procédé selon la présente invention convient tout particulièrement lorsque la température à l'évaporateur est inférieure à 0°C, de préférence inférieure ou égale à -5°C, préférentiellement inférieure ou égale à -10°C, en particulier inférieure ou égale à -15°C, encore plus préférentiellement inférieure ou égale à -20°C, par exemple inférieure ou égale à -25°C, et avantageusement inférieure à -30°C, et de préférence supérieur ou égale à -32°C.

Le procédé selon la présente invention peut convenir à la fois aux véhicules automobiles à moteur thermique, aux véhicules automobiles à moteur électrique, et aux véhicules automobiles hybrides, ces derniers étant conçus pour fonctionner en alternance sur moteur thermique et moteur électrique. Il permet de gérer au mieux les apports en énergie selon les conditions climatiques (chaud ou froid) tant pour l'habitacle que pour la batterie et notamment d'apporter du chaud ou du froid à la batterie à travers un circuit de fluide caloporteur.

La boucle frigorifique réversible, dans laquelle circule le fluide frigorigène tel que défini ci-dessus, installée dans des véhicules automobiles convient particulièrement pour la récupération d'énergie du moteur thermique et/ou de la batterie électrique et/ou du circuit électronique, utile pour le chauffage de l'habitacle et le moteur pendant une phase de démarrage à froid. Cette boucle frigorifique réversible, lorsqu'elle comprend une pompe, peut fonctionner en mode Rankine (c'est-à-dire le compresseur fonctionne comme une turbine) pour valoriser l'énergie thermique produite par le moteur thermique et véhiculée ensuite par le fluide frigorigène, après transfert thermique.

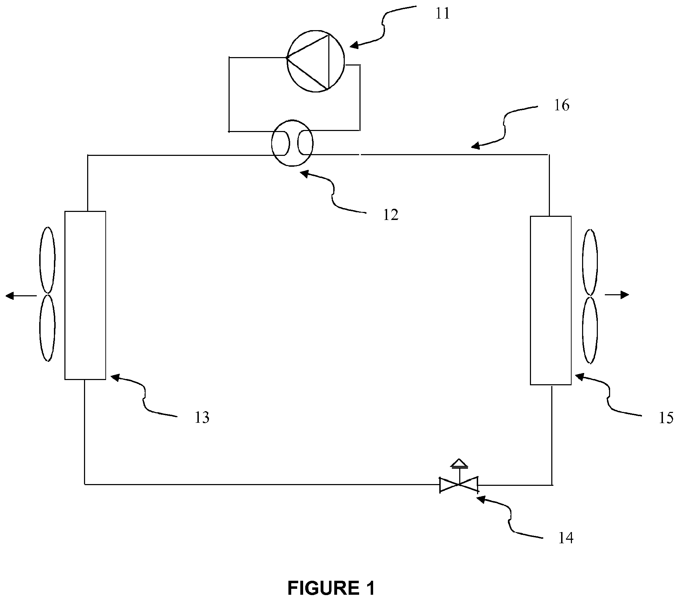

Selon un premier mode de réalisation de l'invention, représenté schématiquement par la **Figure** 1, la boucle frigorifique 16 comprend un premier échangeur de chaleur 13, un détendeur 14, un second échangeur de chaleur 15, un compresseur 11 et une vanne à quatre voies 12. Le premier et second échangeurs de chaleur sont du type air/fluide frigorigène. Le premier échangeur de chaleur 13 est traversé par le fluide frigorigène de la boucle 16 et par le flux d'air amené par un ventilateur. Une partie ou la totalité de ce même flux d'air peut traverser aussi un échangeur de chaleur du circuit de refroidissement du moteur et/ou du circuit électronique (non représenté sur la figure). De la même manière, le second échangeur 15 est traversé par un flux d'air amené par un ventilateur. Une partie ou la totalité de ce flux d'air peut traverser aussi un autre échangeur de chaleur du circuit de refroidissement du moteur et/ou du circuit électronique (non représenté sur la figure). Le sens de circulation de l'air est fonction du mode de fonctionnement de la boucle 16 et des besoins du moteur thermique ou électrique. Ainsi, quand le moteur thermique ou électrique est en fonctionnement et la boucle 16 en mode pompe à chaleur, l'air peut être chauffé par l'échangeur du circuit de refroidissement du moteur thermique ou électrique puis, soufflé sur l'échangeur 13 pour accélérer l'évaporation du fluide de la boucle 16 et donc améliorer les performances de cette boucle.

Les échangeurs du circuit de refroidissement peuvent être activés à l'aide des vannes suivant les besoins du moteur thermique ou électrique (chauffage de l'air entrant dans le moteur ou valorisation d'énergie produite par ce moteur).

En mode frigorifique, le fluide frigorigène mis en mouvement par le compresseur 11 traverse, via la vanne 12, l'échangeur 13 jouant le rôle de condenseur (c'est-à-dire dégage des calories vers l'extérieur), ensuite le détendeur 14, puis l'échangeur 15 jouant le rôle d'évaporateur permettant ainsi le refroidissement du flux d'air destiné à être pulsé à l'intérieur de l'habitacle du véhicule automobile.

Le mode frigorifique selon l'invention peut typiquement être un mode de climatisation.

En mode pompe à chaleur, le sens d'écoulement du fluide frigorigène est inversé par l'intermédiaire de la vanne 12. L'échangeur de chaleur 15 joue le rôle de condenseur tandis que l'échangeur 13 joue le rôle d'évaporateur. L'échangeur de chaleur 15 permet alors de réchauffer le flux d'air destiné à l'habitacle du véhicule automobile.

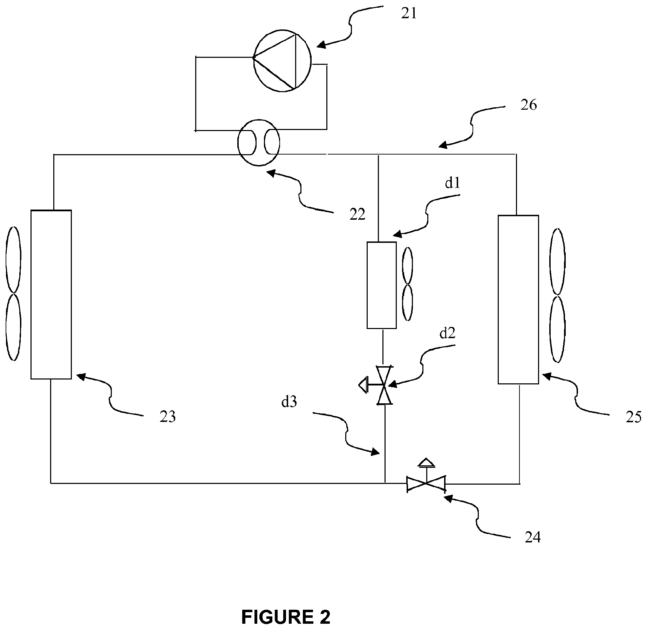

Selon un deuxième mode de réalisation de l'invention, représenté schématiquement par la **Figure 2****,** la boucle frigorifique 26 comprend un premier échangeur de chaleur 23, un détendeur 24, un second échangeur de chaleur 25, un compresseur 21, une vanne à quatre voies 22 et une branche de dérivation d3 montée d'une part à la sortie de l'échangeur 23, et d'autre part à la sortie de l'échangeur 25, en considérant la circulation du fluide en mode frigorifique. Cette branche comprend un échangeur de chaleur d1 traversé par un flux d'air ou un flux de gaz d'échappement et un détendeur d2. Le premier et second échangeurs 23, 25 de chaleur sont du type air/fluide frigorigène. Le premier échangeur de chaleur 23 est traversé par le fluide frigorigène de la boucle 26 et par le flux d'air amené par un ventilateur. Une partie ou la totalité de ce même flux d'air, peut traverser aussi un échangeur de chaleur du circuit de refroidissement du moteur ou du circuit électronique (non représenté sur la figure). De la même manière, le second échangeur 25 est traversé par un flux d'air amené par un ventilateur. Une partie ou la totalité de ce flux d'air peut traverser aussi un autre échangeur de chaleur du circuit de refroidissement du moteur ou du circuit électronique (non représenté sur la figure). Le sens de circulation de l'air est fonction du mode de fonctionnement de la boucle 26 et des besoins du moteur thermique et/ou électrique. A titre d'exemple, quand le moteur thermique et/ou électrique est en fonctionnement et la boucle 26 en mode pompe à chaleur, l'air peut être chauffé par l'échangeur du circuit de refroidissement du moteur thermique et/ou électrique puis, soufflé sur l'échangeur 23 pour accélérer l'évaporation du fluide de la boucle 26 et améliorer les performances de cette boucle.

Les échangeurs du circuit de refroidissement peuvent être activés à l'aide des vannes suivant les besoins du moteur thermique ou électrique (chauffage de l'air entrant dans le moteur ou valorisation d'énergie produite par ce moteur).

L'échangeur de chaleur d1 peut aussi être activé suivant les besoins énergétiques que ce soit en mode frigorifique ou en mode pompe à chaleur. Des vannes d'arrêt (non représentées sur la **Figure 2**) peuvent être installées sur la branche d3 pour activer ou désactiver cette branche.

L'échangeur d1 est traversé par un flux d'air amené par un ventilateur. Ce même flux d'air peut traverser un autre échangeur de chaleur du circuit de refroidissement du moteur et/ou du circuit électronique et aussi d'autres échangeurs placés sur le circuit des gaz d'échappement, sur l'arrivée d'air au moteur ou sur la batterie dans les voitures électriques ou hybrides.

En mode frigorifique, le fluide frigorigène est mis en mouvement par le compresseur 21 traverse, via la vanne 22, l'échangeur 23 jouant le rôle de condenseur (c'est-à-dire dégage des calories vers l'extérieur), il traverse ensuite:
- le détendeur 24 puis l'échangeur 25 jouant le rôle d'évaporateur permettant ainsi le refroidissement du flux d'air destiné à être pulsé à l'intérieur de l'habitacle du véhicule automobile ; et/ou
- le détendeur d2 puis l'échangeur d1 jouant le rôle d'évaporateur permettant par exemple le refroidissement du flux d'air destiné à refroidir le moteur électrique et/ou le circuit électronique et/ou la batterie

En mode pompe à chaleur, le sens d'écoulement du fluide frigorigène est inversé par l'intermédiaire de la vanne 22. L'échangeur de chaleur 25 ainsi que l'échangeur de chaleur d1 jouent le rôle de condenseurs tandis que l'échangeur 23 joue le rôle d'évaporateur. Les échangeurs de chaleur 25 et d1 permettent alors de réchauffer le flux d'air destiné à l'habitacle du véhicule automobile et la batterie.

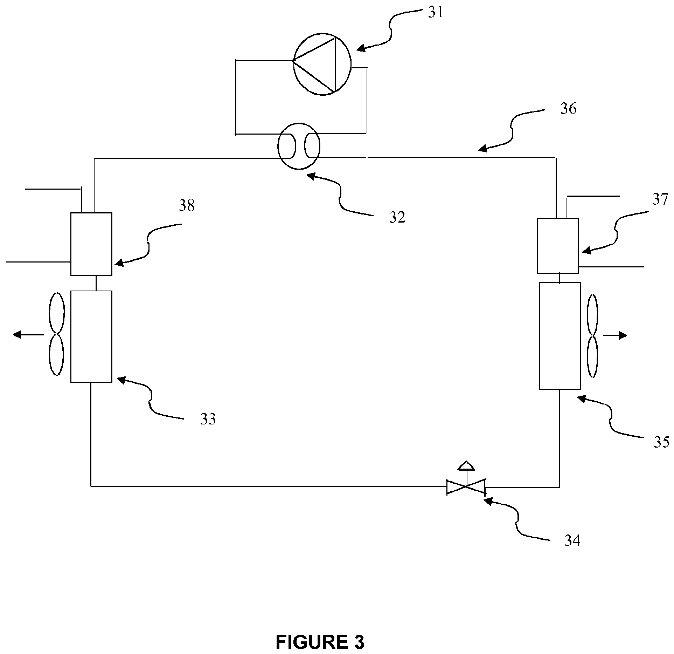

Selon un troisième mode de réalisation de l'invention, représenté schématiquement par la **Figure 3****,** la boucle frigorifique 36 comprend un premier échangeur de chaleur 33, un détendeur 34, un second échangeur de chaleur 35, un compresseur 31 et une vanne à quatre voies 32. Le premier et second échangeurs 33, 35 de chaleur sont du type air/fluide frigorigène. Le fonctionnement des échangeurs 33, 35 est identique au premier mode de réalisation présenté à la Figure 1. Au moins un échangeur fluide/liquide 38, 37 peut être installé à la fois sur le circuit de la boucle frigorifique 36 et sur le circuit de refroidissement du moteur thermique ou électrique ou/et batterie, ou sur un circuit secondaire d'eau glycolée.

La figure 3 divulgue un mode de réalisation avec deux échangeurs de chaleur fluide/liquide 37, 38. Toutefois, selon le troisième mode de réalisation susmentionné, la boucle frigorifique peut comprendre soit l'échangeur 37 ou soit l'échangeur 38 (mode non représenté sur la figure 3).

L'échangeur fluide/liquide 37, 38 peut être monté en série de l'échangeur de chaleur 35, 33 (tel que schématiquement représenté sur la Figure 3), ou en parallèle de celui-ci. Lorsqu'il est monté en série de l'échangeur de chaleur 35, 33, l'échangeur 37, 38 peut être placé avant ou après l'échangeur 35, 33 dans le sens de circulation du fluide frigorigène.

L'installation des échangeurs fluide/liquide sans passer par un fluide intermédiaire gazeux (air) contribue à l'amélioration des échanges thermiques par rapport aux échangeurs air/fluide.

En mode frigorifique, le fluide frigorigène mis en mouvement par le compresseur 31 traverse, via la vanne à quatre voies 32, éventuellement l'échangeur 38 si présent jouant le rôle de condenseur (dégageant calories à travers un circuit secondaire vers l'air admit au moteur thermique et/ou un système de valorisation d'énergie), puis l'échangeur 33 jouant le rôle de condenseur (c'est-à-dire dégage des calories vers l'extérieur), ensuite le détendeur 34, puis l'échangeur 35 jouant le rôle d'évaporateur permettant ainsi le refroidissement du flux d'air destiné à être pulsé à l'intérieur de l'habitacle du véhicule automobile, et éventuellement l'échangeur 37 si présent, jouant le rôle d'évaporateur permettant ainsi le refroidissement d'un liquide permettant à son tour de refroidir l'air à l'intérieur de l'habitacle du véhicule par l'intermédiaire d'un autre échangeur de chaleur liquide/air et/ou de refroidir directement la batterie.

En mode pompe à chaleur, le sens d'écoulement du fluide frigorigène est inversé par l'intermédiaire de la vanne 32. L'échangeur de chaleur 37, si présent, joue le rôle de condenseur, l'échangeur 35 joue également le rôle de condenseur tandis que l'échangeur 33 joue le rôle d'évaporateur, tout comme l'échangeur 38 si présent. L'échangeur de chaleur 35 permet alors de réchauffer le flux d'air destiné à l'habitacle du véhicule automobile. L'échangeur de chaleur 37 permet alors de réchauffer un liquide permettant à son tour de réchauffer le flux d'air destiné à l'habitacle du véhicule automobile par l'intermédiaire d'un autre échangeur de chaleur liquide/air et/ou de chauffer directement la batterie.

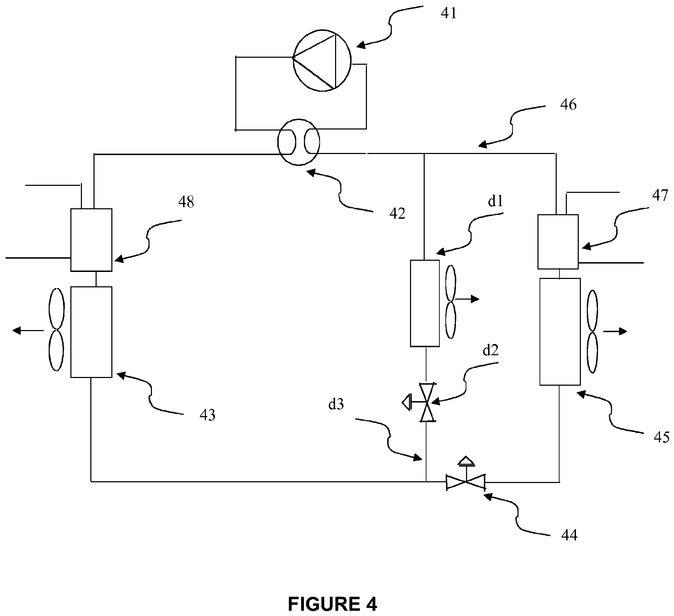

Selon un quatrième mode de réalisation de l'invention, représenté schématiquement par la **Figure 4****,** la boucle frigorifique 46 comprend une première série échangeur de chaleur 43, 48, un détendeur 44, une seconde série échangeur de chaleur 45, 47, un compresseur 41 et une vanne à quatre voies 42. Une branche de dérivation d1 montée d'une part à la sortie de l'échangeur 43, et d'autre part à la sortie de l'échangeur 47, en considérant la circulation du fluide en mode frigorifique. Cette branche comprend un échangeur de chaleur d1 traversé par un flux d'air ou un flux de gaz d'échappement et un détendeur d2. Le fonctionnement de cette branche est identique au second mode de réalisation présenté à la **Figure 2****.**

Les échangeurs 43, 45 de chaleur sont du type air/fluide frigorigène et les échangeurs 48, 47 sont du type liquide/fluide frigorigène. Le fonctionnement de ces échangeurs est identique au troisième mode de réalisation présenté à la **Figure 3****.**

Le fonctionnement de la boucle selon le quatrième mode de réalisation correspond typiquement à la combinaison des fonctionnements du second et troisième mode de réalisation tel que décrits ci-dessus. Ainsi, toutes les caractéristiques de ces deux modes de réalisation s'appliquent pour ce quatrième mode de réalisation.

En particulier, bien que la **Figure 4** divulgue un mode de réalisation avec deux échangeurs de chaleur fluide/liquide 47, 48, la boucle frigorifique peut comprendre soit l'échangeur 47 ou soit l'échangeur 48 (mode non représenté sur la **Figure 4**).

L'échangeur fluide/liquide 47, 48 peut être monté en série de l'échangeur de chaleur 45, 43 (tel que schématiquement représenté sur la **Figure 4**), ou en parallèle de celui-ci. Lorsqu'il est monté en série de l'échangeur de chaleur 45, 43, l'échangeur 47, 48 peut être placé avant ou après l'échangeur 45, 43 dans le sens de circulation du fluide frigorigène.

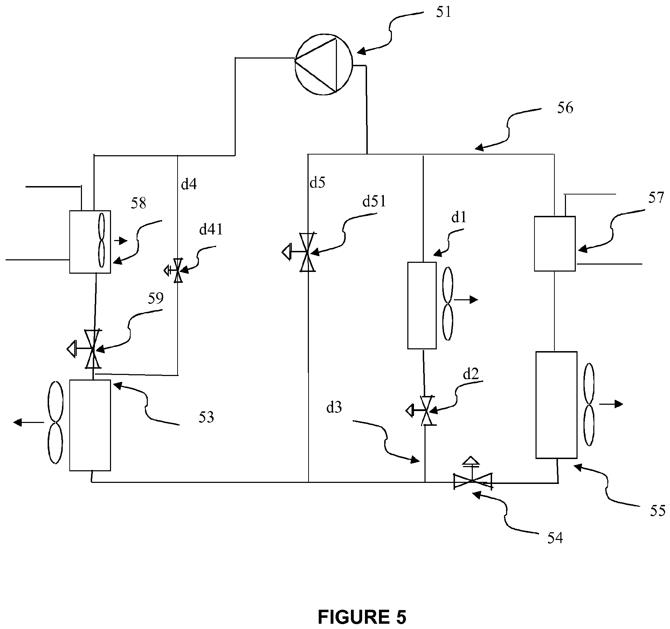

Selon un cinquième mode de réalisation de l'invention, représenté schématiquement par les **Figures 5****,** **6** **et** **7****,** la boucle frigorifique 56 comprend une première série échangeur de chaleur 53, 58, un détendeur 59, un détendeur 54, une seconde série échangeur de chaleur 55, 57, un compresseur 51.

La boucle comprend également une branche de dérivation d3 montée d'une part à la sortie de l'échangeur 53, et d'autre part à la sortie de l'échangeur 57, en considérant la circulation du fluide en mode frigorifique. Cette branche comprend un échangeur de chaleur d1 traversé par un flux d'air ou un flux de gaz d'échappement et un détendeur d2. Le fonctionnement de cette branche est identique au second mode de réalisation présenté à la **Figure 2****.**

La boucle frigorifique comprend également une branche de dérivation d4 comprenant une vanne d41, et une autre branche de dérivation d5 comprenant une vanne d51.

Les échangeurs de chaleur 53, 55 sont du type air/fluide frigorigène, l'échangeur 53 étant de préférence un échangeur air extérieur/fluide frigorigène.

L'échangeur 57 est du type liquide/fluide frigorigène. Le fonctionnement de cet échangeur est identique à l'échangeur 37 du troisième mode de réalisation présenté à la **Figure 3****.**

L'échangeur 58 est du type liquide/fluide frigorigène ou air/fluide frigorigène.

Comme indiqué ci-dessus pour le troisième mode de réalisation, les **Figures 5****,** **6** **et** **7** divulguent des modes de réalisation avec deux échangeurs de chaleur 57, 58. Toutefois, selon le cinquième mode de réalisation susmentionné, la boucle frigorifique peut comprendre soit l'échangeur 57 ou soit l'échangeur 58. De préférence, l'échangeur 57 n'est pas présent dans la boucle.

L'échangeur 57, 58 peut être monté en série de l'échangeur de chaleur 55, 53 (tel que schématiquement représenté sur les **Figures 5****,** **6** **et** **7**), ou en parallèle de celui-ci. Lorsqu'il est monté en série de l'échangeur de chaleur 55, 53, l'échangeur 57, 58 peut être placé avant ou après l'échangeur 55, 53 dans le sens de circulation du fluide frigorigène.

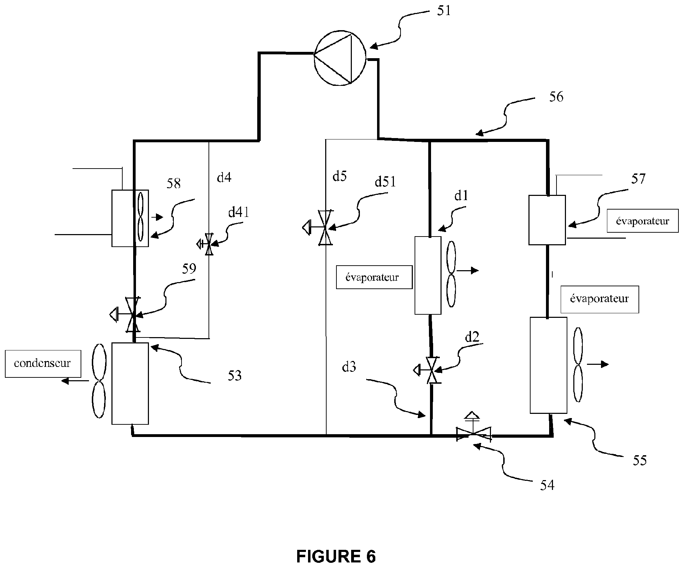

La **Figure 6** représente le mode frigorifique du cinquième mode de réalisation. Dans ce mode frigorifique, le fluide frigorigène est mis en mouvement par le compresseur 51 et traverse :
- soit l'échangeur 58 (si présent) sans que celui-ci ne fonctionne (le fluide ne fait que passer sans que l'échangeur ne soit mis en marche), puis le détendeur 59 sans que celui-ci ne fonctionne (ouvert entièrement) ou alors le fluide frigorigène passe par un by-pass (non représenté sur les **Figures 5****,** **6** **et** **7**) permettant de contourner le détendeur,
- soit une vanne (non représentée sur les figures) en amont de l'échangeur 58 permet de contourner l'échangeur 58 pour que le fluide passe par la dérivation d4 (la vanne 41 étant ouverte).

La vanne d51 étant fermée, le fluide traverse ensuite :
- l'échangeur 53 jouant le rôle de condenseur (c'est-à-dire dégage des calories vers l'extérieur), ensuite le détendeur 54, puis l'échangeur 55 jouant le rôle d'évaporateur permettant ainsi le refroidissement du flux d'air destiné à être pulsé à l'intérieur de l'habitacle du véhicule automobile, et éventuellement l'échangeur 57 si présent, jouant le rôle d'évaporateur permettant ainsi le refroidissement d'un liquide permettant à son tour de refroidir l'air à l'intérieur de l'habitacle du véhicule par l'intermédiaire d'un autre échangeur de chaleur liquide/air ; et/ou
- le détendeur d2 puis l'échangeur d1 jouant le rôle d'évaporateur permettant par exemple le refroidissement du flux d'air destiné à refroidir le moteur électrique et/ou le circuit électronique et/ou la batterie.

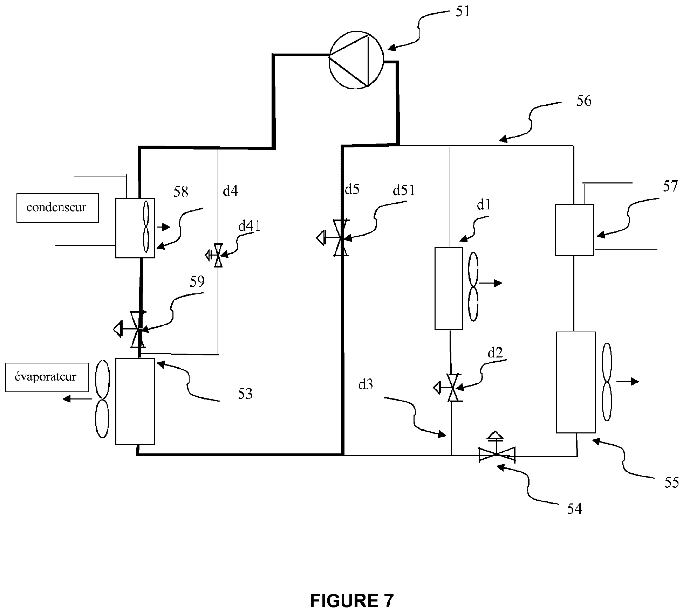

La **Figure 7** représente le mode chauffage du cinquième mode de réalisation. Dans ce mode chauffage, le fluide frigorigène est mis en mouvement par le compresseur 51. La vanne d41 étant fermée, le fluide traverse ensuite l'échangeur 58 jouant le rôle de condenseur, puis le détendeur 59, et l'échangeur de chaleur 53 jouant le rôle d'évaporateur. Les vannes 54, d2 étant fermées, le fluide frigorigène traverse ensuite la dérivation d5 par l'intermédiaire de la vanne ouverte d51.

L'échangeur de chaleur 58, joue le rôle de condenseur et permet alors de réchauffer le flux d'air destiné à l'habitacle du véhicule automobile (s'il s'agit d'un échangeur air/fluide frigorigène), ou alors de réchauffer un liquide permettant à son tour de réchauffer le flux d'air destiné à l'habitacle du véhicule automobile par l'intermédiaire d'un autre échangeur de chaleur liquide/air (s'il s'agit d'un échangeur liquide/fluide frigorigène), le même échangeur pouvant chauffer aussi la batterie si nécessaire.

Dans tous les modes de réalisation susmentionnés, les systèmes décrits peuvent comportés des vannes d'arrêt (de fermeture) ou des dérivations supplémentaires (même si elles ne sont pas présentes sur les **Figures 1 à 7**).

Tous les modes de réalisation décrits ci-dessus peuvent être combinés les uns avec les autres.

Dans certains modes de réalisation, le fluide frigorigène est surchauffé entre l'évaporation et la compression, c'est-à-dire qu'il est porté à une température supérieure à la température de fin d'évaporation, entre l'évaporation et la compression (en mode de refroidissement et/ou en mode de chauffage tels que décrits ci-dessus).

Par « *température de début d'évaporation* », on entend la température du fluide frigorigène à l'entrée de l'évaporateur.

Par « *température de fin d'évaporation* »*,* on entend la température du fluide frigorigène lors de l'évaporation de la dernière goutte de fluide frigorigène sous forme liquide (température de vapeur saturante ou température de rosée).

Lorsque le fluide frigorigène est un corps pur ou un mélange azéotropique, la température de début d'évaporation est égale à la température de fin d'évaporation.

Par « *température moyenne d'évaporation* »*,* on entend la moyenne arithmétique entre la température de début d'évaporation et la température de fin d'évaporation.

On désigne par « *surchauffe* » (équivalent ici à « *surchauffe à l'évaporateur* ») le différentiel de température entre la température maximale atteinte par le fluide frigorigène avant la compression (c'est-à-dire la température maximale atteinte par le fluide frigorigène à l'issue de l'étape de surchauffe) et la température de fin d'évaporation. Cette température maximale est en général la température du fluide frigorigène à l'entrée du compresseur. Elle peut correspondre à la température du fluide frigorigène à la sortie de l'évaporateur. Alternativement, le fluide frigorigène peut être au moins en partie surchauffé entre l'évaporateur et le compresseur (par exemple au moyen d'un échangeur interne). La surchauffe peut être ajustée par un réglage adéquat des paramètres de l'installation, et notamment par un réglage du détendeur. Dans le procédé de l'invention, la surchauffe est de préférence strictement supérieure à 0°C.

Dans certains modes de réalisation, l'installation contient :
- initialement, une composition de transfert de chaleur initiale ;
- puis, après remplacement, une composition de transfert de chaleur de remplacement.

Dans certains modes de réalisation, l'invention prévoit le remplacement de la composition de transfert de chaleur initiale par la composition de transfert de chaleur de remplacement, dans le procédé de transfert de chaleur.

Dans certains modes de réalisation, ce remplacement peut être effectué en vidant, de préférence en totalité ou essentiellement en totalité, le fluide frigorigène initial de l'installation, et en introduisant le fluide frigorigène de remplacement à la place de celui-ci, dans l'installation - et ce sans vider (ou sans vider totalement) le lubrifiant initial. Dans ce cas, le lubrifiant de remplacement peut être le lubrifiant initial lui-même.

Dans certains modes de réalisation, ce remplacement peut être effectué en vidant, de préférence en totalité ou essentiellement en totalité, la composition de transfert de chaleur initiale de l'installation, et en introduisant la composition de transfert de chaleur de remplacement à la place de celle-ci, dans l'installation. Dans ce cas, de préférence le lubrifiant de remplacement est différent du lubrifiant initial.

On considère que le « *même* » procédé est mis en oeuvre, avec la composition de transfert de chaleur initiale d'une part, et avec la composition de transfert de chaleur de remplacement d'autre part.

De préférence, pour les besoins de la comparaison avant et après remplacement, le procédé fonctionne ainsi :
- dans le même mode (à savoir chauffage d'une part ou climatisation d'autre part) ;
- avec une même température moyenne d'évaporation ; et
- avec une même température moyenne de condensation.

Ni le compresseur, ni les échangeurs de chaleur, ni le détendeur ne sont remplacés, lors du remplacement.

Le réglage de ces éléments peut être optionnellement modifié lors du remplacement, afin de garantir que les températures moyennes d'évaporation et de condensation restent les mêmes.

Dans certains modes de réalisation, seul le réglage du détendeur est modifié.

Dans d'autres modes de réalisation, aucun réglage n'est modifié.

La température moyenne de condensation est définie comme étant la moyenne arithmétique entre la température de début de condensation (température du fluide frigorigène dans le condenseur lors de l'apparition de la première goutte liquide de fluide frigorigène, appelée température de saturation vapeur ou température de rosée) et la température de fin de condensation (température du fluide frigorigène lors de la condensation de la dernière bulle de fluide frigorigène sous forme gazeuse, appelée température de saturation liquide ou température de bulle).

On désigne par « *sous-refroidissement* » l'éventuel différentiel de température (en valeur absolue) entre la température minimale atteinte par le fluide frigorigène avant la détente et la température de fin de condensation. Généralement cette température minimale correspond à la température du fluide frigorigène à l'entrée du détendeur. Elle peut correspondre à la température du fluide frigorigène à la sortie du condenseur. Alternativement, le fluide frigorigène peut être au moins en partie sous-refroidi entre le condenseur et le détendeur (par exemple au moyen d'un échangeur interne).

De préférence, dans le procédé de l'invention, un sous-refroidissement (strictement supérieur à 0°C) est appliqué, de préférence un sous-refroidissement de 1 à 50°C, de préférence de 1 à 40°C, de préférence de 1 à 30°C, de préférence de 1 à 20°C, de 1 à 15°C, de préférence de 1 à 10°C et de préférence encore de 1 à 5°C.

### Fluides frigorigènes

Lorsque l'invention est appliquée au remplacement d'une composition de transfert de chaleur initiale, le fluide frigorigène initial peut être tout fluide frigorigène, par exemple un fluide frigorigène comprenant un CFC, ou un HCFC, ou un HFC. Le fluide frigorigène initial peut en particulier avoir un GWP supérieur ou égal à 150, ou supérieur ou égal à 500, ou supérieur ou égal à 1000.

Dans certains modes de réalisation, le fluide frigorigène initial comprend du HFC-134a.

Dans certains modes de réalisation, le fluide frigorigène initial comprend au moins 10 % de HFC-134a, ou au moins 20 % de HFC-134a, ou au moins 30 % de HFC-134a, ou au moins 40 % de HFC-134a, ou au moins 50 % de HFC-134a, ou au moins 60 % de HFC-134a, ou au moins 70 % de HFC-134a, ou au moins 80 % de HFC-134a, ou au moins 90 % de HFC-134a, ou au moins 95 % de HFC-134a, par rapport à la masse totale du fluide frigorigène initial.

Dans certains modes de réalisation, le fluide frigorigène initial consiste essentiellement, ou consiste en du HFC-134a (aux impuretés près).

Dans d'autres modes de réalisation, le fluide frigorigène initial comprend du HFC-134a en mélange avec un ou plusieurs composés de transfert de chaleur, et de préférence un ou plusieurs hydrofluorocarbures et/ou hydrocarbures.

Par « *hydrofluorocarbures* », on entend dans le cadre de la présente demande les hydrofluorocarbures saturés, qui ne sont pas des hydrofluorooléfines.

Parmi les hydrofluorocarbures, on peut citer notamment le difluorométhane (HFC-32), le pentafluoroéthane (HFC-125), le 1,1,2,2-tétrafluoroéthane (HFC-134), le 1,1-difluoroéthane (HFC-152a), le fluoroéthane (HFC-161), le 1,1,1,2,3,3,3-heptafluoropropane (HFC-227ea), le 1,1,1-trifluoropropane (HFC-263fb), et leurs mélanges.

De préférence, le fluide frigorigène initial est dépourvu d'hydrofluorooléfines et d'hydrochlorofluorooléfines.

Des impuretés peuvent être présentes ou non dans de tels fluides frigorigènes. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en masse) dudit fluide.

Le fluide frigorigène utilisé pour mettre en oeuvre le procédé de l'invention, qui est le fluide frigorigène de remplacement si un remplacement est effectué, comprend du HFO-1234yf.

Dans certains modes de réalisation, ce fluide frigorigène comprend au moins 10 % de HFO-1234yf, ou au moins 20 % de HFO-1234yf, ou au moins 30 % de HFO-1234yf, ou au moins 40 % de HFO-1234yf, ou au moins 50 % de HFO-1234yf, ou au moins 60 % de HFO-1234yf, ou au moins 70 % de HFO-1234yf, ou au moins 80 % de HFO-1234yf, ou au moins 90 % de HFO-1234yf, ou au moins 95 % de HFO-1234yf, par rapport à la masse totale du fluide frigorigène de remplacement.

Dans certains modes de réalisation, ce fluide frigorigène consiste essentiellement, ou consiste en du HFO-1234yf (aux impuretés près).

Dans d'autres modes de réalisation, ce fluide frigorigène comprend du HFO-1234yf en mélange avec un ou plusieurs hydrofluorocarbures et/ou hydrofluorooléfines et/ou hydrocarbures et/ou hydrochlorofluorooléfines et/ou du CO₂.

Parmi les hydrofluorooléfines on peut citer notamment le HFO-1234ze, sous forme cis et/ou trans, et de préférence sous forme trans ; et le trifluoroéthylène (HFO-1123).

Parmi les hydrochlorofluorooléfines, on peut citer notamment le 1-chloro-3,3,3-trifluoropropène (HCFO-1233zd), sous forme cis et/ou trans, et de préférence sous forme trans.

Parmi les hydrofluorocarbures, on peut citer notamment le difluorométhane (HFC-32), le pentafluoroéthane (HFC-125), le 1,1,2,2-tétrafluoroéthane (HFC-134), le 1,1,1,2-tétrafluoroéthane (HFC-134a), le 1,1-difluoroéthane (HFC-152a), le fluoroéthane (HFC-161), le 1,1,1,2,3,3,3-heptafluoropropane (HFC-227ea), le 1,1,1-trifluoropropane (HFC-263fb) et leurs mélanges.

Dans certains modes de réalisation, ce fluide frigorigène est une composition binaire (consistant en deux composés) ou ternaire (consistant en trois composés) ou quaternaire (consistant en quatre composés) ou quinquénaire (consistant en cinq composés).

Des impuretés peuvent être présentes ou non dans de tels fluides frigorigènes. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en masse) dudit fluide.

Outre le HFO-1234yf seul (aux impuretés près), des fluides frigorigènes susceptibles d'être utilisés pour le procédé de l'invention (et donc le cas échéant en tant que fluides frigorigènes de remplacement) sont ceux consistant en (aux impuretés près) :
- du HFO-1234yfet du HFC-32 ;
- du HFO-1234yf et du HFC-152a ;
- du HFO-1234yf et du HFC-134a ;
- du HFO-1234yf et du HFC-134 ;
- du HFO-1234yf et du HFO-1123 ;
- du HFO-1234yf et du HFC-125 ;
- du HFO-1234yfet du CO₂;
- du HFO-1234yf, du HFC-32 et du CO₂ ;
- du HFO-1234yf, du HFC-32 et du HFO-1123 ;
- du HFO-1234yf, du HFC-125 et du HFO-1123 ;
- du HFO-1234yf, du HFC-134a et du HFO-1123 ;
- du HFO-1234yf, du HFC-134 et du HFO-1123 ;
- du HFO-1234yf, du HFC-32 et du HFC-125 ;
- du HFO-1234yf, du HFC-152a et du HFC-125 ;
- du HFO-1234yf, du HFC-152a et du HFC-32 ;
- du HFO-1234yf, du HFC-134a et du HFC-152a ;
- du HFO-1234yf, du HFC-134a et du HFC-32 ;
- du HFO-1234yf, du HFC-134a et du HFC-125 ;
- du HFO-1234yf, du HFO-1234ze et du HFC-134a ;
- du HFO-1234yf, du HFO-1234ze et du HFC-152a ;
- du HFO-1234yf, du HFO-1234ze et du HFC-134 ;
- du HFO-1234yf, du HFO-1234ze et du HFC-32 ;
- du HFO-1234yf, du HFO-1234ze et du HFC-125 ;
- du HFO-1234yf, du HFC-134a, du HFC-125 et du HFC-32 ;
- du HFO-1234yf, du HFO-1234ze, du HFC-125 et du HFC-32 ;
- du HFO-1234yf, du HFC-152a, du HFC-125 et du HFC-32 ;
- du HFO-1234yf, du CO₂, du HFC-125 et du HFC-32 ;
- du HFO-1234yf, du HFC-134, du HFC-125 et du HFC-32 ;
- du HFO-1234yf, du HFC-227ea, du HFC-125 et du HFC-32 ;
- du HFO-1234yf, du HFC-134a, du HFC-152a et du HFC-32 ;
- du HFO-1234yf, du HFC-134a, du HFC-152a et du HFC-125 ;
- du HFO-1234yf, du HFO-1234ze, du HFC-152a et du HFC-32 ;
- du HFO-1234yf, du HFO-1234ze, du HFC-134a et du HFC-32 ;
- du HFO-1234yf, du HFO-1234ze, du HFC-134a et du HFC-152a ;
- du HFO-1234yf, du HFO-1234ze, du HFC-134a et du HFC-125 ;
- du HFO-1234yf, du HFC-134a, du HFC-152a, du HFC-125 et du HFC-32 ;
- du HFO-1234yf, du HFC-134a, du HFO-1234ze, du HFC-125 et du HFC-32 ;
- du HFO-1234yf, du HFC-134a, du HFC-227ea, du HFC-125 et du HFC-32 ;
- du HFO-1234yf, du HFC-134a, du CO2, du HFC-125 et du HFC-32 ;
- du HFO-1234yf, du HFC-134a, du HFC-134, du HFC-125 et du HFC-32.

Des fluides frigorigènes préférés sont notamment ceux consistant en (aux impuretés près) :
- du HFO-1234yf et du HFC-32 dans des proportions massiques respectives de 60 à 85 % et de 15 à 40 % ; ou de préférence de 63 à 79 % et de 21 à 37 % ; ou de préférence encore de 64 à 79 % et de 21 à 36 % ;
- du HFO-1234yf, du CO₂ et du HFC-32 dans des proportions massiques respectives de 1 à 98 %, de 1 à 98 % et de 1 à 98 % ; ou de préférence de 50 à 98 %, de 1 à 49 % et de 1 à 49 % ; ou de préférence encore de 70 à 80 %, de 1 à 10% et de 5 à 22 %.

Dans certains modes de réalisation, le fluide frigorigène de l'invention (le cas échéant, fluide frigorigène de remplacement) consiste en (aux impuretés près) : de 74 à 81,5 % (de préférence de 75,5 à 79,5 %) de HFO-1234yf, de 12 à 16 % de HFC-152a, et de 6,5 à 10,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 77,5 % de HFO-1234yf, environ 14 % de HFC-152a et environ 8,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 77,5 % de HFO-1234yf, environ 16 % de HFC-152a et environ 6,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 81,5 % de HFO-1234yf, environ 12 % de HFC-152a et environ 6,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 75,5 % de HFO-1234yf, environ 14,5 % de HFC-152a et environ 10 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 77,5 % de HFO-1234yf, environ 12 % de HFC-152a et environ 10,5 % de HFC-134a (en masse). Un tel fluide frigorigène présente l'avantage d'être azéotropique.

Le GWP du fluide frigorigène utilisé dans le procédé de l'invention (qui le cas échéant est le fluide frigorigène de remplacement) est de préférence inférieur à 1000, de préférence encore inférieur à 500, ou à 150, ou à 100, ou à 50, ou à 25.

Lorsqu'un remplacement est effectué, de préférence, le GWP du fluide frigorigène de remplacement est inférieur au GWP du fluide frigorigène initial.

Le GWP est défini par rapport au dioxyde de carbone et par rapport à une durée de 100 ans, selon la méthode indiquée dans « *The scientific assessment* of *ozone déplétion, 2002, a report of the World Meteorological Association's Global Ozone Research and Monitoring Project ».*

Lorsqu'un remplacement est effectué, dans certains modes de réalisation, le HFC-134a (seul) est remplacé par le HFO-1234yf (seul).

Lorsqu'un remplacement est effectué, dans certains modes de réalisation, un fluide frigorigène initial comprenant du HFC-134a en mélange avec un ou plusieurs autres composés est remplacé par un fluide frigorigène de remplacement comprenant du HFO-1234yf en mélange avec le ou les mêmes autres composés.

De préférence, si du HFC-134a est présent dans le fluide frigorigène de remplacement, la proportion massique de HFC-134a dans le fluide frigorigène de remplacement est inférieure à la proportion massique de HFC-134a dans le fluide frigorigène initial.

De préférence, si un ou des hydrofluorocarbures sont présents dans le fluide frigorigène de remplacement, la proportion massique de l'ensemble des hydrofluorocarbures dans le fluide frigorigène de remplacement est inférieure à la proportion massique de l'ensemble des hydrofluorocarbures dans le fluide frigorigène initial.

### Lubrifiant

La composition de transfert de chaleur utilisée pour la mise en oeuvre du procédé comprend un lubrifiant (lubrifiant dit de remplacement, lorsqu'un remplacement est effectué).

Ce lubrifiant comprend un POE. De préférence, le lubrifiant est un POE. Alternativement, on peut envisager qu'il s'agisse d'un mélange de POE et d'un autre produit comme par exemple un PAG.

Dans ce qui précède, par « *un POE* », on entend soit un POE unique, soit de préférence un mélange de plusieurs POE.

Un POE peut être obtenu par réaction d'au moins un polyol (c'est-à-dire composé contenant au moins deux groupements OH) avec au moins un acide carboxylique.

Les POE susceptibles d'être utilisés dans la présente invention, comprennent les POE de types A, B, C et D décrits plus en détail ci-dessous.

Les POE de type A répondent à la formule (I) suivante :

(I) R¹[OC(O)R²]ₙ

dans laquelle :
- R¹ est un radical hydrocarboné, linéaire ou ramifié, éventuellement substitué par au moins un groupement hydroxyle et/ou comprenant au moins un hétéroatome choisi dans le groupe constitué de O, N, et S;
- chaque R² est, indépendamment, choisi dans le groupe constitué de : i) H ; ii) un radical hydrocarboné aliphatique ; iii) un radical hydrocarboné ramifié ; iv) un mélange d'un radical ii) et/ou iii), avec un radical hydrocarboné aliphatique comprenant de 8 à 14 atomes de carbone ; et
- n est un entier d'au moins 2.

Dans le cadre de l'invention, on entend par « *radical hydrocarboné* » un radical composé d'atomes de carbone et d'hydrogène.

Dans certains modes de réalisation, les polyols utilisés pour l'obtention des POE de type A répondent à la formule (II) suivante :

(II) R¹(OH)ₙ

dans laquelle :
- R¹ est un radical hydrocarboné, linéaire ou ramifié, éventuellement substitué par au moins un groupement hydroxyle, de préférence par deux groupements hydroxyles, et/ou comprenant au moins un hétéroatome choisi dans le groupe constitué de O, N, et S ; et
- n est un entier d'au moins 2.

Dans certains modes de réalisation, R¹ est un radical hydrocarboné, linéaire ou ramifié, comprenant de 4 à 40 atomes de carbone, de préférence de 4 à 20 atomes de carbone.

Dans certains modes de réalisation, R¹ est un radical hydrocarboné, linéaire ou ramifié, comprenant au moins un atome d'oxygène.

Dans certains modes de réalisation, R¹ est un radical hydrocarboné ramifié comprenant de 4 à 10 atomes de carbone, de préférence 5 atomes de carbone, substitué par deux groupements hydroxyles.

Dans certains modes de réalisation, les polyols comprennent de 2 à 10 groupements hydroxyles, de préférence de 2 à 6 groupements hydroxyles.

Les polyols peuvent comprendre un ou plusieurs groupes oxyalkylènes, il s'agit dans ce cas particulier de polyétherpolyols.

Les polyols peuvent également comprendre un ou plusieurs atomes d'azote. Par exemple, les polyols peuvent être des alcanol amine contenant de 3 à 6 groupements hydroxyles. Dans certains modes de réalisation, les polyols sont des alcanol amine contenant au moins deux groupements hydroxyles, et de préférence au moins trois.

Dans certains modes de réalisation, les polyols sont choisis dans le groupe constitué de l'éthylène glycol, du diéthylène glycol, du triéthylène glycol, du propylène glycol, du dipropylène glycol, du glycérol, du néopentylglycol, du 1,2-butanediol, du 1,4-butanediol, du 1,3-butanediol, du pentaérythritol, du dipentaérythritol, du tripentaérythritol, du triglycérol, du triméthylolpropane, du sorbitol, de l'hexaglycérol, et de leurs mélanges.

Dans certains modes de réalisation, les acides carboxyliques utilisés pour l'obtention des POE de type A répondent à la formule (III) suivante :

(III) R²COOH

dans laquelle :
- R² est choisi dans le groupe constitué de : i) H ; ii) un radical hydrocarboné aliphatique ; iii) un radical hydrocarboné ramifié ; iv) un mélange d'un radical ii) et/ou iii), avec un radical hydrocarboné aliphatique comprenant de 8 à 14 atomes de carbone.

Dans certains modes de réalisation, R² est un radical hydrocarboné aliphatique comprenant de 1 à 10, préférentiellement de 1 à 7 atomes de carbone, et en particulier de 1 à 6 atomes de carbone.

Dans certains modes de réalisation, R² est un radical hydrocarboné ramifié comprenant de 4 à 20 atomes de carbone, en particulier de 5 à 14 atomes de carbone, et préférentiellement de 6 à 8 atomes de carbone.

Dans certains modes de réalisation, un radical hydrocarboné ramifié tel que mentionné ci-dessus répond à la formule (IV) suivante :

(IV) -C(R³)(R⁴)(R⁵)

dans laquelle R³, R⁴ et R⁵ sont, indépendamment les uns des autres, un groupe alkyle, et au moins un des groupes alkyles contient au minimum deux atomes de carbone. De tels groupes alkyles ramifiés, une fois liés au groupe carboxyle, sont connus sous la dénomination « *groupe néo* », et l'acide correspondant en tant que « acide néo ». De préférence, R³ et R⁴ sont des groupes méthyles et R⁵ est un groupe alkyle comprenant au moins deux atomes de carbone.

Le radical R² peut comprendre un ou plusieurs groupes carboxy, ou groupes esters tels que -COOR⁶, avec R⁶ représentant un radical alkyle, hydroxyalkyle ou un groupe hydroxyalkyloxy alkyle.

Dans certains modes de réalisation, l'acide R²COOH de formule (III) est un acide monocarboxylique.

Des exemples d'acides carboxyliques dans lesquels le radical hydrocarboné est aliphatique sont notamment : l'acide formique, l'acide acétique, l'acide propionique, l'acide butyrique, l'acide pentanoïque, l'acide hexanoïque et l'acide heptanoïque.

Des exemples d'acides carboxyliques dans lesquels le radical hydrocarboné est ramifié sont notamment : l'acide 2-éthyl-n-butyrique, l'acide 2-hexyldécanoïque, l'acide isostéarique, l'acide 2-méthyl-hexanoïque, l'acide 2-méthylbutanoïque, l'acide 3-méthylbutanoïque, le 3,5,5-triméthyl-hexanoïque, l'acide 2-éthylhexanoïque, l'acide néoheptanoïque, et l'acide néodécanoïque.

D'autres acides carboxyliques pouvant être utilisés dans la préparation des POE de type A sont les acides carboxyliques comprenant un radical hydrocarboné aliphatique comprenant de 8 à 14 atomes de carbone. On peut par exemple citer : l'acide décanoïque, l'acide dodécanoïque, l'acide laurique, l'acide stéarique, l'acide myristique, l'acide béhénique... Parmi les acides dicarboxyliques, on peut citer l'acide maléique, l'acide succinique, l'acide adipique, l'acide sébacique...

Dans certains modes de réalisation, les acides carboxyliques utilisés pour préparer les POE de type A comprennent un mélange d'acides monocarboxyliques et dicarboxyliques, la proportion d'acides monocarboxyliques étant majoritaire. La présence d'acides dicarboxyliques résulte notamment dans la formation de POE de viscosité élevée.

En particulier, la réaction de formation des POE de type A par réaction entre l'acide carboxylique et les polyols est une réaction catalysée par un acide. Il s'agit notamment d'une réaction réversible, qui peut être complète par l'utilisation d'une large quantité d'acide ou par l'élimination de l'eau formée au cours de la réaction. La réaction d'estérification peut être réalisée en présence d'acides organiques ou inorganiques, tels que l'acide sulfurique, l'acide phosphorique...

Dans certains modes de réalisation, la réaction est réalisée en l'absence de catalyseur.

La quantité d'acide carboxylique et de polyol peut varier dans le mélange selon les résultats désirés. Dans le cas particulier où tous les groupements hydroxyles sont estérifiés, une quantité suffisante d'acide carboxylique doit être ajoutée pour réagir avec tous les hydroxyles.

Dans certains modes de réalisation, lors de l'utilisation de mélanges d'acides carboxyliques, ceux-ci peuvent réagir de manière séquentielle avec les polyols.

Dans certains modes de réalisation, lors de l'utilisation de mélange d'acides carboxyliques, un polyol réagit d'abord avec un acide carboxylique, typiquement l'acide carboxylique de poids moléculaire le plus élevé, suivie de la réaction avec l'acide carboxylique ayant une chaîne hydrocarbonée aliphatique.

Dans certains modes de réalisation, les esters peuvent être formés par réaction entre les acides carboxyliques (ou leurs dérivés anhydrides ou esters) avec les polyols, en présence d'acides à température élevée, tout en enlevant l'eau formée au cours de la réaction. Typiquement, la réaction peut être réalisée à une température comprise de 75 à 200°C.

Dans certains modes de réalisation, les POE formés peuvent comprendre des groupements hydroxyles n'ayant pas tous réagi, il s'agit dans ce cas de POE partiellement estérifiés.

Dans certains modes de réalisation, les POE sont obtenus à partir de l'alcool pentaérythritol, et d'un mélange d'acides carboxyliques : l'acide isononanoïque, au moins un acide ayant un radical hydrocarboné aliphatique comprenant de 8 à 10 atomes de carbone, et l'acide heptanoïque. Les esters de polyol préférés sont obtenus à partir du pentaérythritol, et d'un mélange de 70 % d'acide isononanoïque, de 15 % d'au moins un acide carboxylique ayant un radical hydrocarboné aliphatique comprenant de 8 à 10 atomes de carbone, et 15 % d'acide heptanoïque. On peut par exemple citer l'huile Solest 68 commercialisée par CPI Engineering Services Inc.

Les POE de type B comprennent au moins un ester d'un ou plusieurs acides carboxyliques ramifiés comprenant au plus 8 atomes de carbone. L'ester est notamment obtenu par réaction dudit acide carboxylique ramifié avec un ou plusieurs polyols.

De préférence, l'acide carboxylique ramifié comprend au moins 5 atomes de 25 carbone. En particulier, l'acide carboxylique ramifié comprend de 5 à 8 atomes de carbone, et préférentiellement il contient 5 atomes de carbone.

De préférence, l'acide carboxylique ramifié susmentionné ne comprend pas 9 atomes de carbone. En particulier, ledit acide carboxylique n'est pas l'acide 3,5,5-triméthylhexanoïque.

Dans certains modes de réalisation, l'acide carboxylique ramifié est choisi parmi l'acide 2-méthylbutanoïque, l'acide 3-méthylbutanoïque, et leurs mélanges.

Dans certains modes de réalisation, le polyol est choisi dans le groupe constitué du néopentylglycol, du glycérol, du triméthylol propane, du pentaérythritol, du dipentaérythritol, du tripentaerythritol, et de leurs mélanges.

Dans certains modes de réalisation, les POE sont obtenus à partir de :
i) un acide carboxylique choisi parmi l'acide 2-méthylbutanoïque, l'acide 3-méthylbutanoïque, et leurs mélanges ; et
ii) un polyol choisi dans le groupe constitué du néopentylglycol, du glycérol, du triméthylol propane, du pentaérythritol, du dipentaérythritol, du tripentaerythritol, et de leurs mélanges.

Dans certains modes de réalisation, le POE est celui obtenu à partir :
- de l'acide 2-méthylbutanoïque et du pentaérythritol ;
- de l'acide 2-méthylbutanoïque et du dipentaérythritol ;
- de l'acide 3-méthylbutanoïque et du pentaérythritol ;
- de l'acide 3-méthylbutanoïque et du dipentaérythritol ; ou
- de l'acide 2-méthylbutanoïque et du néopentylglycol.

Les POE de type C sont des esters de poly(néopentylpolyol) obtenus par :
i) réaction d'un néopentylpolyol ayant la formule suivante (V) : 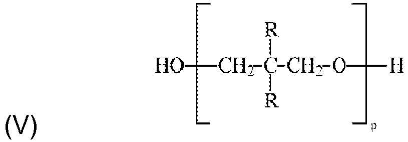 dans laquelle :
   - chaque R représente, indépendamment, CH₃, C₂H₅ ou CH₂OH ;
   - p est un entier allant de 1 à 4 ;
   avec au moins un acide monocarboxylique ayant de 2 à 15 atomes de carbone, et en présence d'un catalyseur acide, le rapport molaire entre les groupes carboxyles et les groupes hydroxyles étant inférieur à 1:1, pour former une composition de poly(néopentyl)polyol partiellement estérifiée; et
ii) réaction de la composition de poly(néopentyl)polyol partiellement estérifiée obtenue à l'issue de l'étape i), avec un autre acide carboxylique ayant de 2 à 15 atomes de carbone, pour former la composition finale d'ester(s) de poly(néopentylpolyol).

De préférence, la réaction i) est réalisée avec un rapport molaire allant de 1:4 à 1:2.

De préférence, le néopentylpolyol a la formule suivante (VI) : 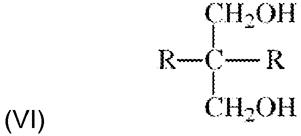 dans laquelle chaque R représente, indépendamment les uns des autres, CH₃, C₂H₅ ou CH₂OH.

Des néopentylpolyols préférés sont ceux choisis parmi le pentaérythritol, le dipentaérythritol, le tripentaérythritol, le tétraérythritol, le triméthylolpropane, le triméthyloléthane, et le néopentylglycol. En particulier, le néopentylpolyol est le dipentaérythritol.

De préférence, un unique néopentylpolyol est utilisé pour produire le lubrifiant. Dans certains cas, deux ou plusieurs néopentylpolyols sont utilisés. C'est notamment le cas lorsqu'un produit commercial de pentaérythritol comprend des faibles quantités de dipentaérythritol, de tripentaérythritol, et de tétraérythritol.

Dans certains modes de réalisation, l'acide monocarboxylique susmentionné comprend de 5 à 11 atomes de carbone, de préférence de 6 à 10 atomes de carbone.

Les acides monocarboxyliques ont notamment la formule générale (VII) suivante :

(VII) R'C(O)OH

dans laquelle R' est un radical alkyle, linéaire ou ramifié, en C1-C12, un radical aryle en C6-C12, un radical aralkyle en C6-C30. De préférence, R' est un radical alkyle en C4-C10, et préférentiellement en C5-C9.

En particulier, l'acide monocarboxylique peut être choisi dans le groupe constitué de l'acide butanoïque, de l'acide pentanoïque, de l'acide hexanoïque, de l'acide heptanoïque, de l'acide n-octanoïque, de l'acide n-nonanoïque, de l'acide n-décanoïque, de l'acide 3-méthylbutanoïque, de l'acide 2-méthylbutanoïque, de l'acide 2,4-diméthylpentanoïque, de l'acide 2-éthylhexanoïque, de l'acide 3,3,5-triméthylhexanoïque, de l'acide benzoïque, et de leurs mélanges.

Dans certains modes de réalisation, l'acide monocarboxylique est l'acide n-heptanoïque, ou un mélange d'acide n-heptanoïque avec un autre acide monocarboxylique linéaire, en particulier l'acide n-octanoïque et/ou l'acide n-décanoïque.

Un tel mélange d'acide monocarboxylique peut notamment comprendre entre 15 et 100 mol% d'acide heptanoïque et entre 0 et 85 mol% d'autre(s) acide(s) monocarboxylique(s). En particulier, le mélange peut comprendre entre 75 et 100 mol% d'acide heptanoïque, et entre 0 et 25 mol% d'un mélange d'acide octanoïque et d'acide décanoïque dans un rapport molaire 3:2.

Dans certains modes de réalisation, les POE comprennent :
i) de 45 à 55 % en masse d'un ester de monopentaérythritol avec au moins un acide monocarboxylique ayant de 2 à 15 atomes de carbone ;
ii) moins de 13 % en masse d'un ester de dipentaérythritol avec au moins un acide monocarboxylique ayant de 2 à 15 atomes de carbone ;
iii) moins de 10 % en masse d'un ester de tripentaérythritol avec au moins un acide monocarboxylique ayant de 2 à 15 atomes de carbone ; et
iv) au moins 25 % en masse d'un ester de tétraérythritol et d'autres oligomères de pentaérythritol, avec au moins un acide monocarboxylique ayant de 2 à 15 atomes de carbone

Dans certains modes de réalisation, les POE comprennent, en masse, de 0 à 5 %, ou de 5 à 10 %, ou de 10 à 15 %, ou de 15 à 20 %, ou de 20 à 25 %, ou de 25 à 30 %, ou de 30 à 35 %, ou de 35 à 40 %, ou de 40 à 45 %, ou de 45 à 50 %, ou de 50 à 55 %, ou de 55 à 60 %, ou de 60 à 65 %, ou de 65 à 70 %, ou de 70 à 75 %, ou de 75 à 80 %, ou de 80 à 85 %, ou de 85 à 90 %, ou de 90 à 95 %, ou de 95 à 100 %, d'un ester de monopentaérythritol avec au moins un acide monocarboxylique contenant de 2 à 15 atomes de carbone.

Les POE de type D répondent à la formule (VIII) suivante : 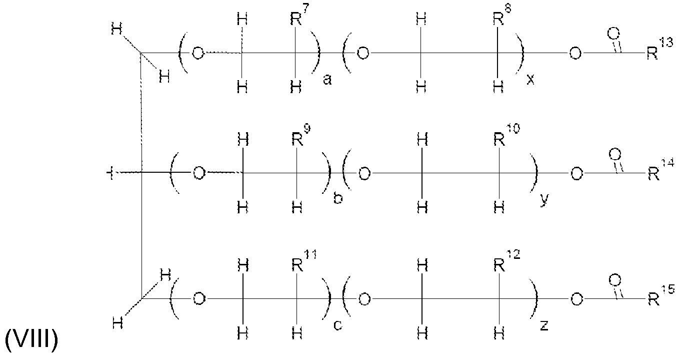 dans laquelle :
- R⁷, R⁸, R⁹, R¹⁰, R¹¹ et R¹² sont, indépendamment les uns des autres, H ou CH₃ ;
- a, b, c, y, x et z, sont, indépendamment les uns des autres, un entier ;
- a+x, b+y, et c+z sont, indépendamment les uns des autres, des entiers allant de 1 à 20 ;
- R¹³, R¹⁴ et R¹⁵ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryles et des cycloalkylarylalkyles, R¹³, R¹⁴ et R¹⁵ ayant de 1 à 17 atomes de carbone, et pouvant être éventuellement substitués.

Dans certains modes de réalisation, chacun de R¹³, R¹⁴ et R¹⁵ représente, indépendamment les uns des autres, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹³, R¹⁴ et R¹⁵ a, indépendamment les uns des autres, de 3 à 8 atomes de carbone, de préférence de 5 à 7 atomes de carbone.

De préférence, a+x, b+y, et c+z sont, indépendamment les uns des autres, des entiers allant de 1 à 10, préférentiellement de 2 à 8, et encore plus préférentiellement de 2 à 4.

De préférence, R⁷, R⁸, R⁹, R¹⁰, R¹¹ et R¹² représentent H.

Les POE de formule (VIII) ci-dessus peuvent typiquement être préparés tels que décrits aux paragraphes [0027] à [0030] de la demande internationale WO 2012/177742.

En particulier, les POE de formule (VIII) peuvent être obtenus par estérification d'alcoxylates de glycérol (tels que décrits au paragraphe [0027] de WO 2012/177742) avec un ou plusieurs acides monocarboxyliques ayant de 2 à 18 atomes de carbone.

Dans certains modes de réalisation, les acides monocarboxyliques ont l'une des formules suivantes : R¹³COOH, R¹⁴COOH et R¹⁵COOH, dans lesquelles R¹³, R¹⁴ et R¹⁵ sont tels que définis ci-dessus. Des dérivés des acides carboxyliques peuvent également être utilisés, tels que les anhydrides, les esters et les halogénures d'acyles.

L'estérification peut être réalisée avec un ou plusieurs acides monocarboxyliques. Des acides monocarboxyliques préférés sont ceux choisis dans le groupe constitué de l'acide acétique, l'acide propanoïque, l'acide butyrique, l'acide isobutanoïque, l'acide pivalique, l'acide pentanoïque, l'acide isopentanoique, l'acide hexanoïque, l'acide heptanoïque, l'acide octanoïque, l'acide 2-éthylhexanoïque, l'acide 3,3,5-triméthylhexanoïque, l'acide nonanoïque, l'acide décanoïque, l'acide néodécanoïque, l'acide undécanoïque, l'acide dodécanoïque, l'acide tridécanoïque, l'acide myristique, l'acide pentadécanoïque, l'acide palmitique, l'acide stéarique, l'acide oléïque, l'acide linoléïque, l'acide palmitoléïque, l'acide citronellique, l'acide undécénoïque, l'acide laurique, l'acide undécylénique, l'acide linolénique, l'acide arachidique, l'acide béhénique, l'acide tétrahydrobenzoïque, l'acide abiétique hydrogéné ou non, l'acide 2-éthylhexanoïque, l'acide furoïque, l'acide benzoïque, l'acide 4- acétylbenzoïque, l'acide pyruvique, l'acide 4-tert-butyl-benzoïque, l'acide naphthenique, l'acide 2-méthyl benzoïque, l'acide salicylique, leurs isomères, leurs esters méthyliques, et leurs mélanges.

Dans certains modes de réalisation, l'estérification est réalisée avec un ou plusieurs acides monocarboxyliques choisis dans le groupe constitué de l'acide pentanoïque, l'acide 2-méthylbutanoïque, l'acide n-hexanoïque, l'acide n-heptanoïque, le 3,3,5-triméthylhexanoïque, l'acide 2-éthylhexanoïque, l'acide n-octanoïque, l'acide n-nonanoïque et l'acide isononanoïque.

De préférence, l'estérification est réalisée avec un ou plusieurs acides monocarboxyliques choisis dans le groupe constitué de l'acide butyrique, l'acide isobutyrique, l'acide n-pentanoïque, l'acide 2-méthylbutanoïque, l'acide 3-méthylbutanoïque, l'avide n-hexanoïque, l'avide n-heptanoïque, l'acide n-octanoïque, l'acide 2-éthylhexanoïque, l'acide 3,3,5-triméthylhexanoïque, l'acide n-nonanoïque, 15 l'acide décanoïque, l'acide undécanoïque, l'acide undécélénique, l'acide laurique, l'acide stéarique, l'acide isostéarique, et leurs mélanges.

Dans certains modes de réalisation, les POE ont la formule (IX) suivante : 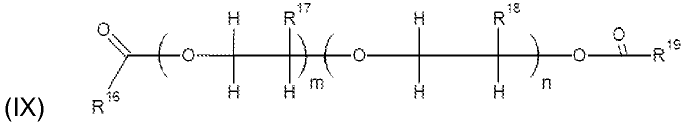 dans laquelle :
- chacun de R¹⁷ et R¹⁸, est, indépendamment l'un de l'autre, H ou CH₃ ;
- chacun de m et n, est, indépendamment l'un de l'autre, un entier, avec m+n étant un entier allant de 1 à 10 ;
- R¹⁶ et R¹⁹ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryles et des cycloalkylarylalkyles, R¹⁶ et R¹⁹ ayant de 1 à 17 atomes de carbone, et pouvant être éventuellement substitués.

Dans certains modes de réalisation, chacun de R¹⁶ et R¹⁹ représente, indépendamment l'un de l'autre, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹⁶ et R¹⁹ a, indépendamment l'un de l'autre, de 3 à 8 atomes de carbone, de préférence de 5 à 7 atomes de carbone.

Dans certains modes de réalisation, chacun de R¹⁷ et R¹⁸ représente H, et/ou m+n est un entier allant de 2 à 8, de 4 à 10, de 2 à 5, ou de 3 à 5. En particulier, m+n vaut 2, 3 ou 4.

Dans certains modes de réalisation, les POE de formule (IX) ci-dessus sont des diesters de triéthylène glycol, des diesters de tétraéthylène glycol, en particulier avec un ou deux acides monocarboxyliques ayant de 4 à 9 atomes de carbone.

Les POE de formule (IX) ci-dessus peuvent être préparés par estérifications d'un éthylène glycol, d'un propylène glycol, ou d'un oligo- ou polyalkylène glycol, (qui peut être un oligo- ou polyéthylène glycol, oligo- ou polypropylène glycol, ou un copolymère à bloc éthylène glycol-propylène glycol), avec un ou deux acides monocarboxyliques ayant de 2 à 18 atomes de carbone. L'estérification peut être réalisée de manière identique à la réaction d'estérification mise en oeuvre pour préparer les POE de formule (VIII) ci-dessus.

En particulier, des acides monocarboxyliques identiques à ceux utilisés pour préparer les POE de formule (VIII) ci-dessus, peuvent être utilisés pour former les POE de formule (IX).

Dans certains modes de réalisation, le lubrifiant comprend de 20 à 80%, de préférence de 30 à 70%, et préférentiellement de 40 à 60% en masse d'au moins un POE de formule (VIII), et de 80 à 20%, de préférence de 70 à 30%, et préférentiellement de 60 à 40% en masse d'au moins un POE de formule (IX).

De manière générale, certaines fonctions alcools peuvent ne pas être estérifiées lors de la réaction d'estérification, cependant leur proportion reste faible. Ainsi, les POE peuvent comprendre entre 0 et 5 % molaire relatif de motifs CH₂OH par rapport aux motifs -CH₂-O-C(=O)-.

Le lubrifiant utilisé dans le procédé de l'invention est tel que la solubilité du HFO-1234yf dans ce lubrifiant est inférieure à la solubilité du HFC-134a dans le lubrifiant

Par « *solubilité* » d'un composé A dans le lubrifiant, on entend la proportion massique maximale de composé A à l'état gazeux qui peut être absorbée par le lubrifiant en phase liquide (c'est-à-dire la proportion massique relative maximale de composé A dans le lubrifiant en phase liquide, lorsque le lubrifiant est mis en contact avec le composé A à l'état gazeux). La solubilité peut être mesurée comme décrit ci-dessous dans l'exemple 1.

La condition de solubilité ci-dessus est vérifiée à une température de 0°C, et à une pression qui est de :
- 2,2 bar abs pour le HFO-1234yf ; et
- 2,0 bar abs pour le HFC-134a.

Ces valeurs de pression correspondent à la pression de saturation vapeur respectivement du HFO-1234yf et du HFC-134a à la température de -10°C.

Lorsqu'un remplacement est effectué, le lubrifiant de remplacement peut être identique au lubrifiant initial ou différent de celui-ci.

Le lubrifiant initial peut être de tout type. Il peut notamment être choisi parmi les huiles minérales, les huiles de silicone, les paraffines naturelles ou synthétiques, les naphtènes, les alkylbenzènes, les poly-alpha oléfines, les polyalkène glycols (PAG), les esters de polyol (POE), les polyvinyléthers et les mélanges de ceux-ci.

De préférence, le lubrifiant initial comprend un POE ou est un POE.

La description détaillée des types de POE possibles effectuée ci-dessus s'applique également au lubrifiant initial, lorsque celui-ci comprend un POE ou est un POE.

### Additifs

Les additifs qui peuvent être présents dans la composition de transfert de chaleur de l'invention peuvent notamment être choisis parmi les nanoparticules, les stabilisants, les tensioactifs, les agents traceurs, les agents fluorescents, les agents odorants et les agents de solubilisation.

De préférence, les additifs ne sont pas des lubrifiants.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de nanoparticules on peut notamment utiliser les nanoparticules de carbone, les oxydes métalliques (cuivre, aluminium), TiO₂, Al₂O₃, MoS₂...

A titre d'agents traceurs (susceptibles d'être détectés), on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent des composés constituant le fluide frigorigène.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide frigorigène.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)- phénol et les combinaisons de ceux-ci.

Lorsqu'un remplacement est effectué, les additifs décrits ci-dessus peuvent être présents dans la composition de transfert de chaleur initiale et/ou dans la composition de transfert de chaleur de remplacement. De préférence, les mêmes additifs sont présents dans la composition de transfert de chaleur initiale et dans la composition de transfert de chaleur de remplacement.

### Formulation des compositions de transfert de chaleur

Dans chaque composition de transfert de chaleur décrite ici (le cas échéant composition de transfert de chaleur initiale d'une part, et composition de transfert de chaleur de remplacement d'autre part), la proportion massique de fluide frigorigène peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition.

Dans la présente description, lorsque plusieurs gammes possibles sont envisagées, les gammes résultant de la combinaison de celles-ci sont aussi couvertes : par exemple, la proportion massique de fluide frigorigène dans la composition de transfert de chaleur peut valoir de 50 à 55 %, et de 55 à 60 %, c'est-à-dire de 50 à 60%, etc.

De préférence, la composition de transfert de chaleur de l'invention (qui le cas échéant est une composition de transfert de chaleur de remplacement) comprend au moins 50 % en masse de fluide frigorigène, et en particulier de 50 % à 95 % en masse.

Le cas échéant, la composition de transfert de chaleur initiale comprend de préférence au moins 50 % en masse de fluide frigorigène, et en particulier de 50 % à 95 % en masse.

Dans chaque composition de transfert de chaleur décrite ici (le cas échéant composition de transfert de chaleur initiale d'une part, et composition de transfert de chaleur de remplacement d'autre part), la proportion massique de lubrifiant peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition.

Les additifs représentent de préférence de 0 à 30 %, de préférence encore de 0 à 20 %, de préférence encore de 0 à 10 %, de préférence encore de 0 à 5 %, et de préférence encore de 0 à 2 % de chaque composition de transfert de chaleur, en proportions massiques.

### Adaptation de la surchauffe et/ou de la viscosité

La surchauffe dans le procédé de transfert de chaleur de l'invention (le cas échéant mis en oeuvre avec la composition de transfert de chaleur de remplacement, lorsqu'un remplacement est effectué) peut être notamment de 1 à 2°C ; ou de 2 à 3°C ; ou de 3 à 4°C ; ou de 4 à 5°C ; ou de 5 à 7°C ; ou de 7 à 10°C ; ou de 10 à 15°C ; ou de 15 à 20°C ; ou de 20 à 25°C ; ou de 25 à 30°C ; ou de 30 à 50°C.

Des gammes de surchauffe de 1 à 20°C, de 2 à 10°C et de 3 à 5°C sont des exemples de gammes préférées.

Lorsqu'un remplacement est effectué, la surchauffe dans le même procédé de transfert de chaleur mis en oeuvre avec la composition de transfert de chaleur initiale peut être notamment de 1 à 2°C ; ou de 2 à 3°C ; ou de 3 à 4°C ; ou de 4 à 5°C ; ou de 5 à 7°C ; ou de 7 à 10°C ; ou de 10 à 15°C ; ou de 15 à 20°C ; ou de 20 à 25°C ; ou de 25 à 30°C ; ou de 30 à 50°C.

Des gammes de surchauffe de 1 à 20°C, de 2 à 10°C et de 3 à 5°C sont des exemples de gammes préférées.

Dans certains modes de réalisation, lorsqu'un remplacement est effectué, la surchauffe est réglée essentiellement à la même valeur, par un ajustement adéquat des paramètres de l'installation et notamment du détendeur.

Dans d'autres modes de réalisation, lorsqu'un remplacement est effectué, la surchauffe est diminuée lors du remplacement de la composition de transfert de chaleur, par un ajustement adéquat des paramètres de l'installation et notamment du détendeur.

Ainsi, la différence entre la surchauffe lorsque le procédé est mis en oeuvre avec la composition de transfert de chaleur initiale et la surchauffe lorsque le procédé est mis en oeuvre, selon l'invention, avec la composition de transfert de chaleur de remplacement peut notamment valoir : de 1 à 2°C ; ou de 2 à 3°C ; ou de 3 à 4°C ; ou de 4 à 5°C ; ou de 5 à 6°C ; ou de 6 à 7 °C ; ou de 7 à 8°C ; ou de 8 à 9°C ; ou de 9 à 10°C ; ou de 10 à 15°C ; ou de plus de 15°C.

Le lubrifiant utilisé dans le procédé de l'invention (qui le cas échéant est le lubrifiant de remplacement, lorsqu'un remplacement est effectué), présente de préférence une viscosité de 1 à 1000 centiStokes (cSt ou mm²/s).

L'ensemble des valeurs de viscosité se rapportent à la viscosité cinématique, mesurée à une température de 40°C, selon la norme DIN EN ISO 3104.

Ce lubrifiant peut ainsi présenter une viscosité de 1 à 5 cSt, ou de 5 à 10 cSt, ou de 10 à 20 cSt, ou de 20 à 30 cSt, ou de 30 à 40 cSt, ou de 40 à 50 cSt, ou de 50 à 60 cSt, ou de 60 à 70 cSt, ou de 70 à 80 cSt, ou de 80 à 90 cSt, ou de 90 à 100 cSt, ou de 100 à 150 cSt, ou de 150 à 200 cSt, ou de 200 à 250 cSt, ou de 250 à 300 cSt, ou de 300 à 400 cSt, ou de 400 à 500-cSt, ou de 500 à 600 cSt, ou de 600 à 700 cSt, ou de 700 à 800 cSt, ou de 800 à 900 cSt, ou de 900 à 1000 cSt.

Des exemples de gammes préférées sont de 10 à 200 cSt, ou de 20 à 100 cSt, ou de 30 à 80 cSt.

Lorsqu'un remplacement est effectué, le lubrifiant initial peut également présenter une viscosité de 1 à 5 cSt, ou de 5 à 10 cSt, ou de 10 à 20 cSt, ou de 20 à 30 cSt, ou de 30 à 40 cSt, ou de 40 à 50 cSt, ou de 50 à 60 cSt, ou de 60 à 70 cSt, ou de 70 à 80 cSt, ou de 80 à 90 cSt, ou de 90 à 100 cSt, ou de 100 à 150 cSt, ou de 150 à 200 cSt, ou de 200 à 250 cSt, ou de 250 à 300 cSt, ou de 300 à 400 cSt, ou de 400 à 500 cSt, ou de 500 à 600 cSt, ou de 600 à 700 cSt, ou de 700 à 800 cSt, ou de 800 à 900 cSt, ou de 900 à 1000-cSt.

Des exemples de gammes préférées sont de 20 à 200 cSt, ou de 35 à 150 cSt, ou de 50 à 100 cSt.

La viscosité du lubrifiant est avantageusement adaptée en fonction du type de procédé de transfert de chaleur mis en oeuvre et en fonction du compresseur utilisé.

Dans certains modes de réalisation, le procédé de transfert de chaleur est mis en oeuvre avec un compresseur hermétique ou semi-hermétique ; dans un tel cas la viscosité du lubrifiant est de préférence de 5 à 100 cSt, de préférence encore de 10 à 80 cSt, et de préférence encore de 20 à 70 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation, le procédé de transfert de chaleur est mis en oeuvre avec un compresseur ouvert ; dans un tel cas la viscosité du lubrifiant est de préférence de 10 à 200 cSt, de préférence encore de 20 à 150 cSt, et de préférence encore de 30 à 100 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation, le procédé de transfert de chaleur est mis en oeuvre avec un compresseur à vis ; dans un tel cas la viscosité du lubrifiant est de préférence de 50 à 500 cSt, de préférence encore de 80 à 400-cSt, et de préférence encore de 100 à 300 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation de l'invention, lorsqu'un remplacement est effectué, le lubrifiant de remplacement est différent du lubrifiant initial, et la viscosité du lubrifiant de remplacement est inférieure à celle du lubrifiant initial. Il est préféré qu'à la fois le lubrifiant initial et le lubrifiant de remplacement soient des lubrifiants POE tels que décrits ci-dessus.

La viscosité du lubrifiant de remplacement (en cSt) peut être ainsi inférieure de 1 à 2 % ; ou de 2 à 3 % ; ou de 3 à 4 %, ou de 4 à 5 % ; ou de 5 à 10 % ; ou de 10 à 15 % ; ou de 15 à 20 % ; ou de 20 à 25 % ; ou de 25 à 30-% ; ou de 30 à 40 % ; ou de 40 à 50 % ; ou de plus de 50 % ; par rapport à la viscosité du lubrifiant initial (en cSt).

La différence entre la viscosité du lubrifiant de remplacement et la viscosité du lubrifiant initial peut par exemple valoir de 1 à 2 cSt ; ou de 2 à 3 cSt ; ou de 3 à 4 cSt ; ou de 4 à 5 cSt ; ou de 5 à 10 cSt ; ou de 10 à 15 cSt ; ou de 15 à 20 cSt ; ou de 20 à 25 cSt ; ou de 25 à 30 cSt ; ou de 30 à 40 cSt ; ou de 40 à 50 cSt ; ou de 50 à 60 cSt ; ou de 60 à 70 cSt ; ou de 70 à 80 cSt ; ou de 80 à 90 cSt ; ou de 90 à 100 cSt ; ou de 100 à 150 cSt ; ou de 150 à 200 cSt ; ou de 200 à 250 cSt ; ou de 250 à 300 cSt ; ou de plus de 300 cSt.

Les exemples suivants illustrent l'invention sans toutefois la limiter.

### EXEMPLES

Les exemples suivants illustrent l'invention sans la limiter.

Dans ces exemples, on considère une installation de réfrigération fonctionnant soit avec du HFC-134a, soit avec du HFO-1234yf, soit avec du HFO-1234ze (sous forme trans). Le lubrifiant utilisé est une huile POE ISO 55 ayant une viscosité de 55 cSt à 40°C.

### Exemple 1 - mesure de la solubilité, viscosité et densité.

Des mesures de solubilité sont effectuées selon le protocole suivant.

Le dispositif de mesure de solubilité est composé d'une cellule métallique avec hublot dotée d'une caméra pour visualiser l'intérieur de la cellule. La cellule est aussi dotée de capteurs de pression absolue, de pression différentielle à haute précision, de température et de mesure de viscosité dynamique. Le capteur de mesure de viscosité est immergé dans la phase liquide du mélange testé.

Tous les capteurs sont étalonnés avant les essais afin de pouvoir mesurer la pression, la température, la viscosité et le volume liquide dans la cellule. La densité de la phase liquide est calculée d'après ces mesures.

L'ensemble de la cellule est gardé à température constante grâce à un système de double enveloppe alimenté par un fluide caloporteur à température réglable.

Une quantité déterminée d'huile est introduite dans la cellule. Les premiers essais consistent à mesurer la viscosité de l'huile à différentes températures. Des quantités déterminées de gaz sont introduites progressivement par la suite. Après chaque ajout de gaz, les mesures sont réalisées sur une plage de température déterminée.

La quantité du gaz en phase vapeur dans le ciel de la cellule est calculée grâce aux mesures du niveau de liquide et à la connaissance préalable du comportement du gaz pur en fonction de la température et de la pression.

La quantité maximale de gaz dissoute dans le liquide est calculée en fonction de la masse du gaz chargé et de la masse du ciel gazeux.

### Exemple 2 -détermination de la solubilité dans un système à compression de vapeur à l'entrée du compresseur

On considère une installation à compression de vapeur fonctionnant avec du HFC-134a, du HFO-1234yf ou du HFO-1234ze. Les pressions à l'entrée du compresseur pour chaque fluide sont respectivement de 1,47 bar (HFO-1234ze), 2,0 bar (HFC-134a) et 2.2 bar (HFO-1234yf). Elles correspondent à la pression de saturation vapeur de chaque fluide à -10°C (les pertes de charge étant négligées). Si l'on considère à présent une surchauffe de 10°C ou de 5°C dans l'installation, la température à l'entrée compresseur est respectivement de 0°C ou de -5°C.

La solubilité du mélange huile/réfrigérant à l'entrée du compresseur est donc fonction de la pression de fonctionnement pour chaque fluide réfrigérant et de la température à l'entrée du compresseur.

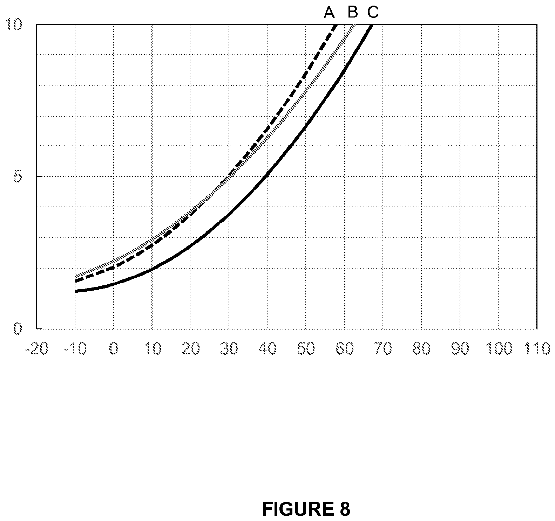

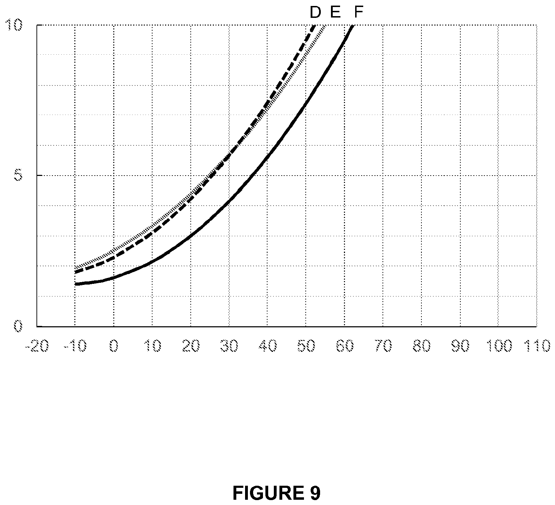

On a représenté sur les **figures 8** et **9** les courbes de pression en fonction de la température, à solubilité constante, pour le HFO-1234yf, le HFO-1234ze et le HFC-134a.

Ces courbes ont été obtenues par modélisation à partir des résultats de mesure de l'exemple 1, en utilisant la méthodologie suivante : la viscosité, la pression et la densité sont exprimées sous forme d'équations, en fonction de la température et de la solubilité. Chaque équation a un nombre de constantes à déterminer par régression en fonction des résultats des mesures ci-dessus. L'équation de la viscosité est une forme modifiée de l'équation de Walther, à neuf constantes. L'équation de la pression est aussi à neuf constantes. Ces deux équations sont décrites dans le document Solubility, viscosity and density of refrigerant/lubricant mixtures de David R. Henderson (Spauschus Associates, Inc. 300 Corporate Center Court Eagle's Landing Stockbridge, GA 30281, April 1994) en page 3. L'équation de la densité est une équation linéaire en fonction de la solubilité (x) et de la température (t) avec quatre constantes à régresser suivant les résultats des mesures (densité = a + bt + cx + dxt avec a, b, c, d constants). Ainsi, pour déterminer l'un des paramètres (température ou pression, densité ou viscosité ou solubilité), il suffit de résoudre un système d'équations à plusieurs inconnues.

Les mélanges d'huile et de fluide frigorigène illustrés contiennent 22 % de HFC-134a (courbe A), 15 % de HFO-1234yf (courbe B), 23,8 % de HFO-1234ze (courbe C), avec une surchauffe de 10°C dans l'installation ; ou 26 % de HFC-134a (courbe D), 18,5 % de HFO-1234yf (courbe E) et 27,6 % de HFO-1234ze (courbe F) avec une surchauffe de 5°C dans l'installation.

Ainsi, si l'on remplace le HFC-134a par du HFO 1234yf, la solubilité du fluide frigorigène est réduite, même en réduisant la surchauffe de 10°C à 5°C. Ce n'est pas le cas avec le HFO 1234ze.

### Exemple 3 - détermination de la viscosité dans un système à compression de vapeur à l'entrée du compresseur

Avec le dispositif de mesure décrit à l'exemple 1, des mesures de viscosité dynamique de différents mélanges ont été effectuées. La viscosité cinématique est calculée d'après les mesures de la viscosité dynamique et de la densité.

Si on considère le même système de l'exemple 2, La viscosité cinématique du mélange fluide frigorigène / huile à une température de 0°C et aux pressions de fonctionnement correspondantes (correspondant à une température d'évaporation de -10°C et 10°C de surchauffe) est de 44 cSt avec le HFC-134a et de 79 cSt avec le HFO-1234yf. Elle est de 45,18 cSt avec le HFO-1234ze

La viscosité cinématique du mélange fluide frigorigène / huile à une température de -5°C et aux pressions de fonctionnement correspondantes (correspondant à une température d'évaporation de -10°C et 5°C de surchauffe) est de 38,6 cSt avec le HFC-134a et de 69 cSt avec le HFO-1234yf. Elle est de 40,3 cSt avec le HFO-1234ze.

Ainsi, même en réduisant la surchauffe, le mélange huile / HFO-1234yf conserve une viscosité élevée par rapport à la référence avec le HFC-134a.

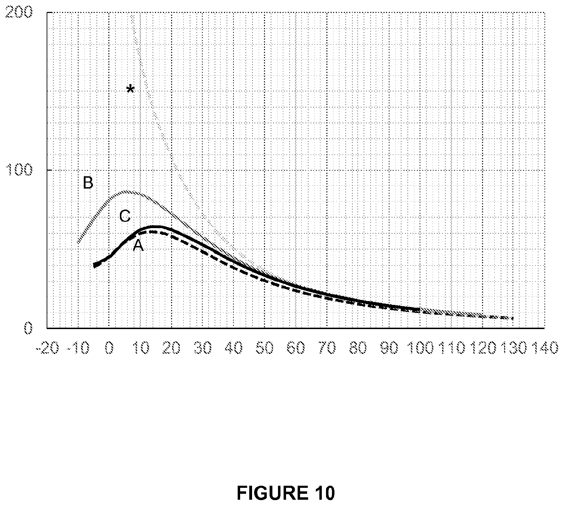

Sur la **figure 10****,** on a représenté la viscosité cinématique en fonction de la température à pression constante pour chaque fluide réfrigérant dans les conditions de pression de l'exemple 2. La courbe repérée par une étoile (*) correspond à l'huile seule. Ces courbes sont résultats de la modélisation des points de mesures discutée ci-dessus.

On constate que le HFO-1234yf présente un comportement en viscosité nettement distinct de celui du HFC-134a et de celui du HFO-1234ze quand la température du mélange est inférieure à 40°C.

Le tableau ci-dessous résume les résultats obtenus :

| **Fluide frigorigène** | HFC-134a | HFC-134a | HFO-1234yf | HFO-1234yf | HFO-1234ze | HFO-1234ze |
|---|---|---|---|---|---|---|
| **Pression de saturation (bar)** | 2 | 2 | 2,2 | 2,2 | 1,47 | 1,47 |
| **Température entrée compresseur** | 0°C | -5°C | 0°C | -5°C | 0°C | -5°C |
| **Surchauffe** | 10°C | 5°C | 10°C | 5°C | 10°C | 5°C |
| **Température minimale de l'huile** | 0°C | -5°C | 0°C | -5°C | 0°C | -5°C |
| **Solubilité** | 22 % | 26 % | 15 % | 18,5 % | 23,8 % | 27,6 % |
| **Viscosité (mm²/s)** | 44 | 38,6 | 79 | 69 | 45,2 | 40,3 |

### Exemple 4 - performances en climat chaud

Une analyse des performances d'une installation fonctionnant avec une température de condensation de 55°C, une température d'évaporation de -5°C, 10°C de sous-refroidissement et une surchauffe variable de 3°C à 10°C a été effectuée comme suit. Les propriétés thermodynamiques ont été calculées à l'aide du logiciel Refprop.

Les résultats sont présentés dans le tableau ci-dessous :

| | **Pₘₐₓ (bar)** | **Pₘᵢₙ (bar)** | **Rapport Pₘₐₓ/Pₘᵢₙ** | **Surch. (°C)** | **RI** | **% CAP** | **% COP** |
|---|---|---|---|---|---|---|---|
| HFC-134a | 14,9 | 2,4 | 6,13 | 10,0 | 72 | 100 | 100 |
| HFO-1234ze | 11,3 | 1,8 | 6,30 | 10,0 | 71 | 73 | 98 |
| HFO-1234yf | 14,6 | 2,7 | 5,51 | 10,0 | 75 | 92 | 97 |
| HFO-1234yf | 14,6 | 2,7 | 5,51 | 9,0 | 75 | 92 | 98 |
| HFO-1234yf | 14,6 | 2,7 | 5,51 | 8,0 | 75 | 93 | 98 |
| HFO-1234yf | 14,6 | 2,7 | 5,51 | 7,0 | 75 | 93 | 99 |
| HFO-1234yf | 14,6 | 2,7 | 5,51 | 6,0 | 75 | 93 | 99 |
| HFO-1234yf | 14,6 | 2,7 | 5,51 | 5,0 | 75 | 94 | 100 |
| HFO-1234yf | 14,6 | 2,7 | 5,51 | 4,0 | 75 | 94 | 100 |
| HFO-1234yf | 14,6 | 2,7 | 5,51 | 3,0 | 75 | 95 | 101 |

Dans ce tableau, Pₘₐₓ et Pₘᵢₙ désignent les pressions maximale et minimale dans le système, Surch. désigne la surchauffe, RI désigne le rendement isentropique, CAP désigne la capacité volumétrique, COP désigne le coefficient de performance.

Ces résultats démontrent que le coefficient de performance (COP) et la capacité volumétrique augmentent lorsque la surchauffe diminue. Ainsi, le passage d'une surchauffe de 10°C à 5°C augmente le COP de 3 % et la capacité de 2 %.

Selon l'invention, la baisse de surchauffe à l'entrée du compresseur est possible grâce à la faible solubilité du HFO-1234yf avec les huiles POE par rapport au HFC-134a et au HFO-1234ze.

## Revendications

1. Procédé de chauffage et/ou de climatisation d'un habitacle de véhicule automobile à l'aide d'une boucle frigorifique réversible, dans laquelle circule une composition de transfert de chaleur, comprenant un premier échangeur de chaleur, un détendeur, un second échangeur de chaleur, un compresseur et des moyens d'inversion du fonctionnement de la boucle frigorifique réversible, dans lequel la composition de transfert de chaleur comprend :
- un fluide frigorigène, qui comprend du 2,3,3,3-tétrafluoropropène, et
- un lubrifiant ;
dans lequel le lubrifiant comprend un ester de polyol, la solubilité du 2,3,3,3-tétrafluoropropène dans le lubrifiant à 0°C et à une pression absolue de 2,2 bar étant inférieure à la solubilité du 1,1,1,2-tétrafluoroéthane dans le lubrifiant à 0°C et à une pression absolue de 2,0 bar.

2. Procédé selon la revendication 1, comprenant les étapes :
- d'évaporation du fluide frigorigène ;
- de surchauffe du fluide frigorigène ;
- de compression du fluide frigorigène

3. Procédé selon la revendication 2, dans lequel la surchauffe du fluide frigorigène est de 1 à 20°C, de préférence de 2 à 10°C, de préférence encore de 3 à 5°C.

4. Procédé selon l'une des revendications 1 à 3, dans lequel le lubrifiant comprend un ester de dipentaérythritol.

5. Procédé selon l'une des revendications 1 à 4, dans lequel le lubrifiant présente une viscosité cinématique à 40°C de 10 à 200 mm2/s (10 à 200 cSt), de préférence de 20 à 100 mm2/s (20 à 100 cSt), et de préférence encore de 30 à 80 mm2/s (30 à 80 cSt).

6. Procédé selon l'une des revendications 1 à 5, dans lequel ladite composition de transfert de chaleur est une composition de transfert de chaleur de remplacement, qui est utilisée en remplacement d'une composition de transfert de chaleur initiale comprenant :
- un fluide frigorigène initial, et
- un lubrifiant initial.

7. Procédé selon la revendication 6, dans lequel la surchauffe avec la composition de transfert de chaleur de remplacement est inférieure ou égale à la surchauffe lorsque le même procédé est mis en oeuvre avec la composition de transfert de chaleur initiale ; et de préférence la surchauffe avec la composition de transfert de chaleur de remplacement est inférieure d'au moins 2°C, de préférence d'au moins 5°C, de préférence encore d'au moins 10°C, par rapport à la surchauffe lorsque le même procédé est mis en oeuvre avec la composition de transfert de chaleur initiale.

8. Procédé selon la revendication 6 ou 7, dans lequel le lubrifiant de la composition de transfert de chaleur de remplacement est identique au lubrifiant initial.

9. Procédé selon la revendication 6 ou 7, dans lequel le lubrifiant de la composition de transfert de chaleur de remplacement est différent du lubrifiant initial.

10. Procédé selon la revendication 9, dans lequel le lubrifiant de la composition de transfert de chaleur de remplacement a une viscosité cinématique à 40°C inférieure ou égale à la viscosité cinématique à 40°C du lubrifiant initial, la différence entre la viscosité cinématique à 40°C du lubrifiant initial et la viscosité cinématique à 40°C du lubrifiant de la composition de transfert de chaleur de remplacement étant de préférence supérieure ou égale à 5 mm2/s (5 cSt). de préférence encore supérieure ou égale à 10mm2/s (10 cSt).

11. Procédé selon l'une des revendications 6 à 10, dans lequel le lubrifiant initial comprend un ester de polyol, et de préférence comprend un ester de dipentaérythritol.

12. Procédé selon l'une des revendications 6 à 11, dans lequel le fluide frigorigène initial comprend du 1,1,1,2-tétrafluoroéthane ou consiste essentiellement en du 1,1,1,2-tétrafluoroéthane.

13. Procédé selon l'une des revendications 1 à 12, dans lequel le premier et le second échangeurs sont du type air/fluide frigorigène.

14. Procédé selon l'une des revendications 1 à 13, dans lequel la boucle frigorifique est couplée thermiquement avec un circuit de refroidissement de moteur et/ou de circuit électronique.

15. Procédé selon l'une des revendications 1 à 14, dans lequel le premier échangeur de chaleur est traversé à la fois par le fluide frigorigène, et par des gaz d'échappement issus d'un moteur thermique du véhicule automobile ou par la chaleur issue d'une batterie ou d'un circuit électronique du véhicule automobile.

16. Procédé selon l'une des revendications 1 à 15, dans lequel la boucle frigorifique comprend en dérivation au moins un échangeur de chaleur communiquant thermiquement avec un flux d'air, destiné à être admis à l'intérieur d'un moteur thermique du véhicule automobile, ou avec des gaz d'échappement issus du moteur thermique, et/ou avec de la chaleur issue d'un moteur électrique et/ou d'un circuit électronique et d'une batterie du véhicule automobile.

17. Procédé selon l'une des revendications 1 à 16, dans lequel la boucle frigorifique est installée dans le véhicule automobile pour la récupération d'énergie issue d'un moteur thermique et/ou d'une batterie électrique.

## Patentansprüche

1. Verfahren zum Heizen und/oder Klimatisieren eines Fahrgastraums eines Kraftfahrzeugs mit Hilfe einer reversiblen Kühlschleife, in der eine Wärmeübertragungszusammensetzung zirkuliert, umfassend einen ersten Wärmetauscher, einen Druckminderer, einen zweiten Wärmetauscher, einen Verdichter und Mittel zur Umkehrung des Betriebs der reversiblen Kühlschleife, **dadurch gekennzeichnet, dass** die Wärmeübertragungszusammensetzung Folgendes umfasst:
- ein Kältefluid, das 2,3,3,3-Tetrafluorpropen umfasst, und
- ein Schmiermittel;
wobei das Schmiermittel einen Polyolester umfasst, die Löslichkeit des 2,3,3,3-Tetrafluorpropens in dem Schmiermittel bei 0 °C und bei einem Absolutdruck von 2,2 bar kleiner als die Löslichkeit von 1,1,1,2-Tetrafluorethan in dem Schmiermittel bei 0 °C und bei einem Absolutdruck von 2,0 bar ist.

2. Verfahren nach Anspruch 1, das folgende Schritte umfasst:
- Verdampfen des Kältefluids;
- Überhitzen des Kältefluids;
- Verdichten des Kältefluids.

3. Verfahren nach Anspruch 2, wobei die Überhitzung des Kältefluids 1 bis 20 °C, bevorzugt 2 bis 10 °C, weiter bevorzugt 3 bis 5 °C, beträgt.

4. Verfahren nach einem der Ansprüche 1 bis 3, wobei das Schmiermittel einen Dipentaerythritolester umfasst.

5. Verfahren nach einem der Ansprüche 1 bis 4, wobei das Schmiermittel eine kinematische Viskosität bei 40 °C von 10 bis 200 mm²/s (10 bis 200 cSt), bevorzugt von 20 bis 100 mm²/s (20 bis 100 cSt) und weiter bevorzugt von 30 bis 80 mm²/s (30 bis 80 cSt) aufweist.

6. Verfahren nach einem der Ansprüche 1 bis 5, wobei es sich bei der Wärmeübertragungszusammensetzung um eine Ersatz-Wärmeübertragungszusammensetzung handelt, die als Ersatz für eine anfängliche Wärmeübertragungszusammensetzung, die
- ein anfängliches Kältefluid und
- ein anfängliches Schmiermittel
umfasst, verwendet wird.

7. Verfahren nach Anspruch 6, wobei die Überhitzung mit der Ersatz-Wärmeübertragungszusammensetzung kleiner oder gleich der Überhitzung bei Durchführung des gleichen Verfahrens mit der anfänglichen Wärmeübertragungszusammensetzung ist und vorzugsweise die Überhitzung mit der Ersatz-Wärmeübertragungszusammensetzung mindestens 2 °C, bevorzugt mindestens 5 °C, weiter bevorzugt mindestens 10 °C, kleiner ist als die Überhitzung bei Durchführung des gleichen Verfahrens mit der anfänglichen Wärmeübertragungszusammensetzung.

8. Verfahren nach Anspruch 6 oder 7, wobei das Schmiermittel der Ersatz-Wärmeübertragungszusammensetzung mit dem anfänglichen Schmiermittel identisch ist.

9. Verfahren nach Anspruch 6 oder 7, wobei das Schmiermittel der Ersatz-Wärmeübertragungszusammensetzung von dem anfänglichen Schmiermittel verschieden ist.

10. Verfahren nach Anspruch 9, wobei das Schmiermittel der Ersatz-Wärmeübertragungszusammensetzung eine kinematische Viskosität bei 40 °C aufweist, die kleiner oder gleich der kinematische Viskosität bei 40 °C des anfänglichen Schmiermittels ist, wobei die Differenz zwischen der kinematischen Viskosität bei 40 °C des anfänglichen Schmiermittels und der kinematischen Viskosität bei 40°C des Schmiermittels der Ersatz-Wärmeübertragungszusammensetzung bevorzugt größer oder gleich 5 mm²/s (5 cSt), weiter bevorzugt größer oder gleich 10 mm²/s (10 cSt), ist.

11. Verfahren nach einem der Ansprüche 6 bis 10, wobei das anfängliche Schmiermittel einen Polyolester umfasst und bevorzugt einen Dipentaerythritolester umfasst.

12. Verfahren nach einem der Ansprüche 6 bis 11, wobei das anfängliche Kältefluid 1,1,1,2-Tetrafluorethan umfasst oder im Wesentlichen aus 1,1,1,2-Tetrafluorethan besteht.

13. Verfahren nach einem der Ansprüche 1 bis 12, wobei der erste und der zweite Wärmetauscher vom Luft/Kältefluid-Typ sind.

14. Verfahren nach einem der Ansprüche 1 bis 13, wobei die Kühlschleife thermisch mit einem Kühlkreislauf des Motors und/oder der elektronischen Schaltung gekoppelt ist.

15. Verfahren nach einem der Ansprüche 1 bis 14, wobei der erste Wärmetauscher sowohl von dem Kältefluid als auch von Auspuffgasen, die vom Verbrennungsmotor des Kraftfahrzeugs stammen, oder von der Wärme, die aus einer Batterie oder aus einer elektronischen Schaltung des Kraftfahrzeugs stammt, durchströmt wird.

16. Verfahren nach einem der Ansprüche 1 bis 15, wobei die Kühlschleife als Abzweigung mindestens einen Wärmetauscher umfasst, der mit einem Luftstrom, der zum Einlassen in den Verbrennungsmotor des Kraftfahrzeugs bestimmt ist, oder mit Auspuffgasen, die vom Verbrennungsmotor stammen und/oder mit der Wärme, die aus einem Elektromotor und/oder aus einer elektronischen Schaltung und einer Batterie des Kraftfahrzeugs stammt, in Wärmeverbindung steht.

17. Verfahren nach einem der Ansprüche 1 bis 16, wobei die Kühlschleife in dem Kraftfahrzeug zur Rückgewinnung von Energie des Verbrennungsmotors und/oder der elektrischen Batterie installiert ist.

## Claims

1. Method for heating and/or air conditioning a motor vehicle interior using a reversible refrigeration loop, in which a heat-transfer composition circulates, comprising a first heat exchanger, a pressure reducer, a second heat exchanger, a compressor and means for reversing the operation of the reversible refrigeration loop, wherein the heat-transfer composition comprises:
- a refrigerant fluid comprising 2,3,3,3-tetrafluoropropene, and
- a lubricant
wherein the lubricant comprises a polyol ester, the solubility of the 2,3,3,3-tetrafluoropropene in the lubricant at 0°C and at an absolute pressure of 2.2 bar being lower than the solubility of the 1,1,1,2-tetrafluoroethane in the lubricant at 0°C and at an absolute pressure of 2.0 bar.

2. Method according to Claim 1, comprising the steps:
- of evaporating the refrigerant fluid;
- of superheating the refrigerant fluid;
- of compressing the refrigerant fluid.

3. Method according to Claim 2, wherein the superheating of the refrigerant fluid is by 1 to 20°C, preferably by 2 to 10°C and, more preferably still, by 3 to 5°C.

4. Method according to one of Claims 1 to 3, wherein the lubricant comprises a dipentaerythritol ester.

5. Method according to one of Claims 1 to 4, wherein the lubricant has a kinematic viscosity at 40°C of 10 to 200 mm²/s (10 to 200 cSt), preferably of 20 to 100 mm²/s (20 to 100 cSt) and, more preferably still, of 30 to 80 mm²/s (30 to 80 cSt).

6. Method according to one of Claims 1 to 5, wherein said heat-transfer composition is a replacement heat-transfer composition used as a replacement for an initial heat-transfer composition comprising:
- an initial refrigerant fluid, and
- an initial lubricant.

7. Method according to Claim 6, wherein the superheating with the replacement heat-transfer composition is less than or equal to the superheating when the same method is implemented with the initial heat-transfer composition; and for preference, the superheating with the replacement heat transfer composition is at least 2°C, preferably at least 5°C and, more preferably still, at least 10°C lower than the superheating when the same method is implemented using the initial heat-transfer composition.

8. Method according to Claim 6 or 7, wherein the lubricant in the replacement heat-transfer composition is identical to the initial lubricant.

9. Method according to Claim 6 or 7, wherein the lubricant in the replacement heat-transfer composition is different from the initial lubricant.

10. Method according to Claim 9, wherein the lubricant in the replacement heat-transfer composition has a kinematic viscosity at 40°C that is less than or equal to the kinematic viscosity at 40°C of the initial lubricant, the difference between the kinematic viscosity at 40°C of the initial lubricant and the kinematic viscosity at 40°C of the lubricant in the replacement heat transfer composition preferably being greater than or equal to 5 mm²/s (5 cSt) or, more preferably still, greater than or equal to 10 mm²/s (10 cSt).

11. Method according to one of Claims 6 to 10, wherein the initial lubricant comprises a polyol ester and preferably comprises a dipentaerythritol ester.

12. Method according to one of Claims 6 to 11, wherein the initial refrigerant fluid comprises 1,1,1,2-tetrafluoroethane or consists predominantly of 1,1,1,2-tetrafluoroethane.

13. Method according to one of Claims 1 to 12, wherein the first and second exchangers are of the air/refrigerant fluid type.

14. Method according to one of Claims 1 to 13, wherein the refrigeration loop is thermally coupled to a cooling circuit that cools an engine and/or an electronic circuit.

15. Method according to one of Claims 1 to 14, wherein the first heat exchanger has passing through it both the refrigerant fluid and the exhaust gases from a combustion engine of the motor vehicle or the heat coming from a battery or from an electronic circuit of the motor vehicle.

16. Method according to one of Claims 1 to 15, wherein the refrigeration loop comprises, branching off from it, at least one heat exchanger thermally communicating with an air flow intended to be admitted into a combustion engine of the motor vehicle, or with exhaust gases coming from the combustion engine, and/or with heat coming from an electric motor and/or from an electronic circuit and from a battery of the motor vehicle.

17. Method according to one of Claims 1 to 16, wherein the refrigeration loop is installed in the motor vehicle in order to recover energy coming from a combustion engine and/or from an electric battery.
